# FASCICULE DE BREVET EUROPEEN

(11) **EP 4 240 526 B1**
(45) Date de publication et mention de la délivrance du brevet: **07.08.2024**
(21) Numéro de dépôt: 21809939.8
(22) Date de dépôt: 04.11.2021
(51) Int. Cl.: B01D 63/08, B01L 3/00, B01L 9/00, B01D 61/18

(54) **PROCÉDÉ DE FABRICATION D'UNE PUCE D'ANALYSE ET PUCE D'ANALYSE**
VERFAHREN ZUR HERSTELLUNG VON ANALYSECHIPS UND AUF DIESE WEISE ERHALTENER ANALYSECHIP
METHOD FOR MANUFACTURING ANALYSIS CHIPS AND ANALYSIS CHIP THUS OBTAINED

(30) Priorité: 06.11.2020 FR 2011446
(43) Date de publication de la demande: 13.09.2023
(73) Titulaire: PRECIPHOS, 67000 Strasbourg (FR)
(72) Inventeur: PFLIMLIN, Pascal, 68390 Baldersheim (FR); LUDWIG, Bernard, 1228 PLAN-LES-OUATES (CH)
(74) Mandataire: Fidal Innovation
(86) Numéro de dépôt international: PCT/EP2021/080623
(87) Numéro de publication internationale: WO 2022/096564

(56) Documents cités:
- US-A1- 2004 258 571
- US-A1- 2004 258 571
- US-A1- 2016 082 435
- US-A1- 2016 082 435
- US-A9- 2017 028 376
- US-A9- 2017 028 376

## Description

### DOMAINE DE L'INVENTION

La présente invention se rapporte au domaine des analyses biologiques, notamment des analyses biochimiques.

Plus précisément, l'invention se rapporte à un procédé de fabrication de puces filtrantes, pouvant éventuellement être fonctionnalisées pour réaliser des analyses biologiques.

### ARRIÈRE-PLAN TECHNOLOGIQUE

Dans le domaine des analyses biologiques, il est connu d'utiliser des puces à protéines (« protein microarrays ») pour étudier l'activité biochimique des protéines. Dans de telles puces, une bibliothèque d'anticorps ou de fragments protéiques (« sondes ») - voire de protéines entières - est disposée sur une matrice telle qu'une lame en verre. Dans ce cas, un seul et même échantillon est testé sur l'ensemble des sondes déposées sur la matrice.

Des dispositifs d'analyses biologiques permettant l'analyse en parallèle de plusieurs échantillons ont aussi été développés.

Le document WO2014/053237 est un exemple dans lequel un dispositif miniaturisé permet une analyse de plusieurs échantillons biologiques simultanément (analyse « en multiplex »). Chaque échantillon peut de plus être exposé à plusieurs sondes différentes successivement. Autrement dit, le dispositif permet une analyse de type « analyse 3D ».

Le dispositif décrit par ce document comprend une pluralité de canaux, dans chacun desquels peut être injecté un échantillon en phase liquide indépendamment des autres canaux.

Chaque canal peut être formé de plusieurs portions tubulaires. Entre deux portions successives est insérée une zone d'analyse approximativement cylindrique formée dans une matrice appropriée.

Les zones d'analyse peuvent notamment être formées dans une matrice plane en nitrocellulose dont toute la surface sauf les zones d'analyse est rendue hydrophobe par une imprégnation de cire.

Les zones d'analyse peuvent être simplement constituées de nitrocellulose non traitée, de sorte qu'elles constituent des zones de filtration, ou bien de nitrocellulose fonctionnalisée par exemple au moyen d'une molécule sonde.

L'opération d'imprégnation avec de la cire permet de délimiter les zones d'analyse, mais aussi de limiter la diffusion latérale à l'intérieur de la matrice (c'est-à-dire hors d'une zone d'analyse donnée vers les autres zones d'analyse voisines) des molécules d'intérêt (molécules sondes ou molécules d'un échantillon).

Pour cette opération d'imprégnation, un procédé d'impression à encre solide est mis en oeuvre, de façon à déposer sur la matrice une couche de cire dans les zones qui doivent être rendues hydrophobes. A l'issue de l'impression, la matrice est chauffée à une température supérieure à la température de fusion de la cire utilisée, puis refroidie, de façon à ce que la cire diffuse latéralement et en profondeur, dans l'épaisseur de la matrice, de manière à limiter sa diffusion ultérieure indésirable vers les zones d'analyse.

Cependant, un tel procédé ne permet pas de contrôler finement le volume d'une zone d'analyse donnée ni la forme de la surface qui délimite ce volume, comme le montrent les figures présentées dans ce document. En particulier, la circonférence de la surface supérieure d'un site de test varie d'un site à l'autre et n'est en général pas circulaire, de sorte que, dans la direction de l'écoulement, la section de la zone d'analyse n'est pas précisément identique à la section intérieure du canal dans laquelle la zone d'analyse doit être insérée.

En conséquence, la précision d'un tel dispositif est limitée du fait du procédé de fabrication utilisé pour former les zones d'analyse,et de manière concomitante, la limite de quantification reste trop élevée pour certaines analyses biologiques dans lesquelles les concentrations mises en jeu (ou leurs variations) sont particulièrement faibles. US2016/082435A1 concerne un dispositif et des procédés utilisant des milieux poreux dans des dispositifs fluidiques.

Le document US2004/0115707 divulgue quant à lui une unité d'analyse biochimique comprenant une plaque de base présentant une pluralité de trous remplis d'un matériau poreux et adsorbant de manière à former une pluralité de zones d'analyse.

Le remplissage des trous peut être obtenu par laminage d'une feuille de matériau adsorbant sur la plaque de base préalablement percée.

Lors du laminage, la feuille de matériau d'analyse est sollicitée de manière anisotrope du fait de l'effort de traction exercé dans la direction du laminage. Les propriétés du matériau adsorbant après insertion dans les trous sont donc anisotropes. Il est même possible que l'épaisseur du matériau adsorbant varie au sein d'un même trou.

Par ailleurs, le laminage ne rompt pas la continuité de la feuille de matériau adsorbant. Le matériau adsorbant forme donc une surface continue entre deux canaux sous ou sur la plaque, comme cela peut-être observé sur la figure 2b du document US2004/0115707. Les molécules d'intérêt (de l'échantillon ou sondes) risquent donc de diffuser d'un canal 3 à l'autre du fait de cette continuité.

La précision et la sensibilité d'une analyse quantitative effectuée avec une telle plaque sont donc limitées.

Dans un autre mode de réalisation décrit par US2004/0115707, le matériau adsorbant peut être dissous dans un solvant. La solution obtenue est ensuite injectée dans les trous et le solvant évaporé. Cette technique d'injection en phase liquide ne permet pas non plus un contrôle précis de l'isotropie des propriétés de la zone de test, notamment parce que le flux d'air permettant l'évaporation du solvant est nécessairement directionnel.

Par ailleurs, il peut rester des traces de solvant dans le matériau adsorbant, qui risquent d'interagir avec les molécules sondes ou à analyser.

En outre, l'utilisation de solvants, notamment des solvants organiques dans le cas de la nitrocellulose, rend le procédé polluant.

Enfin, la liaison entre le matériau adsorbant, une fois solidifié, et la plaque de base n'est pas assurée de manière certaine. La qualité de cette liaison dépend notamment des compositions chimiques du matériau adsorbant et de la plaque de base. La liaison entre une zone d'analyse donnée et la plaque peut donc s'avérer fragile. En cas de circulation forcée de liquide, au moyen d'un vide relatif, ces zones d'analyse risqueraient de se détacher et d'être entraînée par le liquide circulant. Il n'est donc pas possible de pratiquer une analyse avec circulation forcée de liquide à travers les zones d'analyse obtenues par ce mode de réalisation.

D'autres procédés, mettant en oeuvre différents produits chimiques ou une étape de chauffage ou une étape d'irradiation par exemple sont aussi décrits dans le document WO01/19502A2, après une première étape de laminage.

Outre les inconvénients du laminage précédemment exposés, tous ces modes de réalisation présentent l'inconvénient d'entraîner des modifications physico-chimiques de la membrane filtrante qui altèrent ses propriétés essentielles pour l'analyse et donc la sensibilité et la précision de l'analyse.

Dans la mesure où la composition chimique et la structure physique de la membrane sur laquelle est mise en oeuvre l'analyse influent sur les performances de la méthode d'analyse, et notamment sur la limite de quantification de cette méthode, l'invention vise donc à proposer un procédé de fabrication d'une puce d'analyse d'un échantillon biologique permettant de contrôler finement cette composition chimique et cette structure physique.

En particulier, l'invention vise à proposer un procédé de fabrication d'une puce d'analyses à faible coût, ne nécessitant pas d'étape de traitement thermique, chimique ou d'irradiation pour la formation des sites de test dans la matrice (mis-à-part lors d'une éventuelle fonctionnalisation biochimique de ces sites postérieure ou antérieure à la formation des sites) et permettant de réaliser une analyse quantitative de précision et de sensibilité élevées et/ou une analyse d'un échantillon biologique ou une simple filtration d'un échantillon biologique liquide.

### RÉSUMÉ DE L'INVENTION

Ainsi, l'invention se rapporte à un procédé de fabrication d'une puce d'analyse d'un échantillon biologique comprenant :
- on fournit une matrice formée dans un matériau support solide, présentant une surface inférieure et une surface supérieure et dans laquelle a été formé au moins un trou la traversant entre lesdites surfaces inférieure et supérieure, le trou traversant étant un cylindre;
- on fournit au moins une pastille, découpée dans une feuille de matériau d'analyse solide et poreux, la pastille présentant une surface inférieure et une surface supérieure,
- on procède à l'insertion d'au moins une pastille dans au moins un trou traversant de la matrice par translation de l'au moins une pastille suivant la direction normale aux surfaces inférieure et supérieure de la matrice ;
- on réalise un assemblage mécanique à une température inférieure aux températures de fusion des matériaux support et d'analyse, au cours de laquelle une force pressante de direction normale aux surfaces inférieure et supérieure de la matrice est exercée sur au moins une portion de la matrice qui jouxte l'au moins une pastille insérée dans la matrice et /ou sur au moins une des surfaces inférieure et supérieure de l'au moins une pastille insérée dans la matrice, ledit assemblage mécanique de l'au moins une pastille avec la matrice résultant en un sertissage de l'au moins une pastille sur au moins une portion de ses surfaces inférieure et supérieure par la matrice.

Grâce à ces dispositions, on obtient une puce d'analyse comprenant au moins une pastille de matériau d'analyse insérée dans un trou traversant un matériau support. L'assemblage entre la pastille et le matériau support n'est pas obtenu par un procédé chimique, ni par fusion d'un des matériaux de sorte que les propriétés physiques et chimiques des matériaux support et d'analyse avant l'assemblage ne sont pas ou tout au moins sont très peu altérées après l'assemblage, y compris à proximité de l'interface entre ces deux matériaux. L'assemblage est obtenu uniquement mécaniquement et par l'exercice d'une force pressante normale aux surfaces supérieure et inférieure de la matrice, de sorte que la déformation des matériaux est uniforme dans un plan normal à la direction de la force pressante. Le procédé permet donc, à la différence des procédés mettant en oeuvre une étape de laminage, de ne pas introduire d'anisotropie dans le matériau support et ou le matériau d'analyse dans une direction normale à la direction de la force pressante. Une telle anisotropie conduirait par exemple dans le cas de tests immunologiques mettant en oeuvre des réactifs fluorescent à une fluorescence inhomogène à la surface d'une pastille d'analyse, ce qui rendrait l'analyse quantitative du signal de fluorescence imprécise.

Grâce à l'ensemble de ces dispositions, la sensibilité et la reproductibilité d'une puce d'analyse obtenue par le procédé suivant l'invention sont donc améliorées par rapport à des puces obtenues suivant les procédés de l'art antérieur.

Par ailleurs, les moyens nécessaires pour mettre en oeuvre sont uniquement mécaniques, donc peu polluants en ce qu'ils ne comprennent pas de solvant et ils sont simples à mettre en oeuvre. Selon différents aspects, il est possible de prévoir l'une et/ou l'autre des caractéristiques ci-dessous prises seules ou en combinaison.

Selon un mode de réalisation, dans le procédé de fabrication d'une puce d'analyse d'un échantillon biologique, la force pressante est exercée sur une portion de la matrice qui jouxte l'au moins une pastille insérée dans la matrice. Grâce à cette disposition, cette portion de la matrice peut être repliée au-dessus et/ou en-dessous de la pastille de sorte que la pastille peut être au moins partiellement sertie par la matrice. Ainsi, l'assemblage de la pastille à la matrice dans la puce d'analyse présentera une bonne résistance mécanique et ne sera pas affecté par l'écoulement d'un échantillon liquide à analyser dans la direction normale aux surfaces supérieure et inférieure de la matrice, voire par un vide relatif appliqué du côté de l'une de ces surfaces dans le but d'accélérer l'écoulement de l'échantillon liquide.

Selon un mode de réalisation du procédé de fabrication d'une puce d'analyse d'un échantillon biologique, la force pressante est exercée sur au moins une des surfaces inférieure et supérieure de l'au moins une pastille insérée dans la matrice. Grâce à cette disposition, la pastille sertit au moins partiellement la matrice de sorte que l'assemblage de la pastille à la matrice présentera une certaine résistance mécanique et il ne sera pas affecté par l'écoulement d'un échantillon liquide à analyser dans la direction normale aux surfaces supérieure et inférieure de la matrice, voire par un vide relatif appliqué du côté de l'une de ces surfaces dans le but d'accélérer l'écoulement de l'échantillon liquide.

Selon un mode de réalisation particulier, dans le procédé de fabrication d'une puce d'analyse d'un échantillon biologique, le matériau support est hydrophobe et le matériau d'analyse est hydrophile ou inversement. De cette manière, il est par exemple possible de déposer sur la pastille un échantillon à tester en phase aqueuse sans qu'il ne diffuse vers le matériau support si celui -ci est hydrophobe. Inversement si le matériau support est hydrophile, le matériau d'analyse est hydrophobe et il est alors possible de déposer sur la pastille un échantillon à tester en phase organique sans qu'il ne diffuse vers le matériau support.

Selon un mode de réalisation particulier, dans le procédé de fabrication d'une puce d'analyse d'un échantillon biologique, pour l'insertion de l'au moins une pastille dans l'au moins un trou traversant, l'au moins une pastille est translatée dans l'au moins un trou traversant au moyen d'un emporte-pièce, l'au moins une pastille ayant été découpée dans la feuille de matériau d'analyse avant son insertion au moyen de ce même emporte-pièce et l'au moins un trou traversant ayant été formé au préalable dans la matrice au moyen de ce même emporte-pièce. Grâce à cette disposition, un seul outil est nécessaire pour préparer une puce d'analyse, à savoir un emporte-pièce présentant un ou plusieurs poinçons de tailles et de formes adaptées aux formes des puits souhaités. Un tel outil est simple à concevoir et à mettre en oeuvre et permet éventuellement une automatisation du procédé, ce qui permet d'obtenir de manière reproductible, rapide et à faible coût des puces d'analyse de précision élevée et contrôlée. Selon un mode de réalisation particulier, dans le procédé de fabrication d'une puce d'analyse d'un échantillon biologique, à l'issue de l'assemblage mécanique, on procède à la fonctionnalisation de l'au moins une pastille. On peut par exemple envisager une fonctionnalisation biochimique, au moyen d'un anticorps ou d'un antigène qui s'adsorbe sur la pastille.

De cette manière, la puce d'analyse d'un échantillon biologique obtenue par le procédé permet de mettre en oeuvre un test d'analyse mettant en oeuvre le réactif utilisé pour la fonctionnalisation, par exemple un test immunologique. La puce d'analyse peut donc être adaptée aux besoins d'analyse grâce à cette étape de fonctionnalisation.

Les puces d'analyses peuvent par exemple être produites en série avant l'étape de fonctionnalisation et fonctionnalisées chacune à volonté au moment de l'analyse.

Selon un mode de réalisation particulier, dans le procédé de fabrication d'une puce d'analyse d'un échantillon biologique, on procède à la fonctionnalisation du matériau d'analyse avant l'insertion de l'au moins une pastille dans la matrice. Grâce à cette disposition, la fonctionnalisation peut se faire sur l'ensemble d'une feuille de matériau d'analyse avant le découpage de la pastille. Cela permet un gain de temps lorsque les puces d'analyse sont préparées en série. Le contrôle de la fonctionnalisation, et notamment d'une quantité de réactif d'analyse déposé sur chaque pastille, est aussi meilleur, ce qui permet au final une meilleure précision et une meilleure reproductibilité des tests effectués avec une série donnée de puces d'analyse.

Selon un mode de réalisation particulier, dans le procédé de fabrication d'une puce d'analyse d'un échantillon biologique, on réitère l'insertion de l'au moins une pastille dans la matrice au moins une fois en utilisant pour chaque nouvelle insertion un matériau d'analyse fonctionnalisé différent de celui utilisé pour l'insertion précédente et un emporte-pièce correspondant à au moins un trou traversant de la matrice différent celui utilisé pour l'insertion précédente.

Grâce à cette disposition, il est possible de former plusieurs pastilles d'analyse fonctionnalisées différemment sur une même puce d'analyse. Il est alors possible de réaliser plusieurs tests différents simultanément sur la même puce, sur le même échantillon ou sur plusieurs échantillons différents. Le procédé reste simple à mettre en oeuvre puisqu'il ne nécessite que des emporte-pièces différents ou équivalemment un seul emporte-pièce muni de plusieurs poinçons positionnés à des endroits différents et qui peuvent être activés séparément ou par groupes. Selon un mode de réalisation particulier, dans le procédé de fabrication d'une puce d'analyse d'un échantillon biologique, l'assemblage mécanique d'au moins une pastille avec la matrice résulte en un sertissage d'au moins une pastille sur au moins une portion de ses surfaces inférieure et supérieure par la matrice.

Grâce à cette disposition, la pastille ne peut pas être poussée, dans les conditions normales d'utilisation, à l'extérieur de la matrice au moins d'un côté de cette matrice. L'assemblage de la matrice et de la pastille résiste donc à un vide relatif ou à la pression exercée sur un côté de la pastille par l'échantillon à tester lorsqu'il est déposé.

Selon un mode de réalisation particulier, dans le procédé de fabrication d'une puce d'analyse d'un échantillon biologique, avant l'insertion de l'au moins une pastille dans la matrice, l'au moins une pastille est portée à une température inférieure à celle de la matrice. Grâce à cette disposition, le matériau d'analyse se rétracte avant son insertion, ce qui facilite son insertion dans le trou traversant en réduisant les forces de contact et il se dilate après insertion, de sorte qu'après insertion, le contact entre la pastille et la matrice est assuré et permet le maintien en place de la pastille dans la matrice.

L'invention concerne aussi une puce d'analyse d'un échantillon biologique comprenant :
- une matrice formée dans un matériau support solide, présentant une surface inférieure et une surface supérieure et dans laquelle a été formé au moins un trou la traversant entre lesdites surfaces inférieure et supérieure, le trou traversant étant un cylindre de révolution;
- au moins une pastille, découpée dans une feuille de matériau d'analyse solide et poreux et insérée dans l'au moins un trou traversant, l'au moins une pastille présentant une surface inférieure et une surface supérieure, la puce d'analyse d'un échantillon biologique étant caractérisée en ce que l'au moins une pastille est sertie sur au moins une de ses surfaces supérieure et inférieure par la matrice.

Une telle puce d'analyse présente l'avantage de ne pas contenir de résidu de solvant ou de zone de fusion ou de brasure qui pourraient altérer la précision d'un test réalisé avec cette puce. Le sertissage permet à la fois de conserver les propriétés physico-chimiques natives du matériau support et du matériau d'analyse. Il permet aussi de réaliser un test avec écoulement d'un échantillon suivant l'axe du trou traversant d'un côté à l'autre de la pastille, puisque l'assemblage entre la pastille et la matrice présente une bonne résistance mécanique.

Selon un mode de réalisation de la puce d'analyse d'un échantillon biologique, le matériau support comprend au moins un composant choisi parmi un métal, un matériau plastique et la cellulose et en ce que le matériau d'analyse dont est formée l'au moins une pastille comprend au moins un composant choisi parmi la nitrocellulose, la cellulose, et un polymère organique.

De tels matériaux sont peu coûteux et présentent les qualités nécessaires d'inertie biochimique et d'adsorption pour mettre en oeuvre des analyses telles que des tests biochimiques.

Selon un mode de réalisation de la puce d'analyse d'un échantillon biologique, l'assemblage de l'au moins une pastille et de la matrice résiste au moins à un vide relatif égal à 0,100 bar. Grâce à cette disposition, il est possible de mettre en oeuvre une analyse sur un échantillon s'écoulant de manière forcée à travers la pastille sans que la pastille ne se sépare de la matrice du fait des surpressions qui s'exercent localement.

L'invention porte encore sur un dispositif d'analyse d'un échantillon biologique comprenant au moins deux puces d'analyse d'un échantillon biologique suivant l'un des modes de réalisation précédents superposées et dans lequel l'au moins une pastille d'une des au moins deux puces est configurée pour assurer une fonction de filtration et est superposée avec l'au moins une pastille fonctionnalisée d'uneautre puce des au moins deux puces.

Il est ainsi possible d'empiler plusieurs puces d'analyse pour obtenir un dispositif d'analyse en trois dimensions, l'analyse réalisée variant d'un site d'analyse à l'autre dans la direction de l'empilement et/ou au sein d'une puce d'analyse donnée et de réaliser une première étape de filtration avant l'analyse, notamment pour séparer le sérum des globules rouges en vue d'une analyse d'un prélèvement sanguin. Dans ce dernier cas, le dispostif permet d'éviter une étape de centrifugation.

L'invention porte en outre sur un kit de diagnostic comprenant au moins une puce d'analyse d'un échantillon biologique suivant l'un des modes de réalisation précédents et au moins un réactif d'analyse. Un ou plusieurs réactifs d'analyse, notamment un tampon, un solvant, un antigène, un anticorps, peuvent ainsi être fournis afin de réaliser un test, tel qu'un test immunologique, standardisé.

L'invention concerne aussi l'utilisation d'une puce d'analyse d'un échantillon biologique selon l'un des modes de réalisation précédents à des fins de diagnostic ou pour un test immunologique.

Divulgué est aussi un dispositif de fabrication d'une puce d'analyse d'un échantillon biologique suivant l'un des modes de réalisation précédents, le dispositif de fabrication comprenant :
- un système d'insertion adapté pour insérer l'au moins une pastille dans l'au moins un trou traversant de la matrice par translation de la pastille suivant la direction normale aux surfaces inférieure et supérieure de la matrice ;
- un système d'assemblage mécanique à une température inférieure aux températures de fusion des matériaux support et d'analyse, adapté pour exercer une force pressante de direction normale aux surfaces inférieure et supérieure de la matrice sur au moins une portion de la matrice qui jouxte l'au moins une pastille insérée dans la matrice et/ou sur au moins une des surfaces inférieure et supérieure de l'au moins une pastilles insérée dans la matrice.

Un tel dispositif de fabrication est simple à mettre en oeuvre et n'introduit qu'une déformation du matériau support et/ou d'analyse tout au plus minime et isotrope dans tout plan parallèle aux surfaces inférieure et supérieure de la matrice. Il permet donc de former des puces d'analyse à faible coût et en préservant les propriétés physico-chimiques natives des matériaux support et d'analyse.

### BRÈVE DESCRIPTION DES DESSINS

Des modes de réalisation de l'invention seront décrits ci-dessous par référence aux dessins, décrits brièvement ci-dessous :
La figure 1 représente un mode de réalisation d'une matrice support de puce d'analyse.
La figure 2 représente une bande support dans laquelle trois pièces de base permettant de former chacune une matrice support viennent d'être découpées.
La figure 3a1 représente une portion de matrice support au début du perçage d'un trou traversant, vue en coupe suivant un plan contenant l'axe de ce trou, suivant un mode de réalisation particulier.

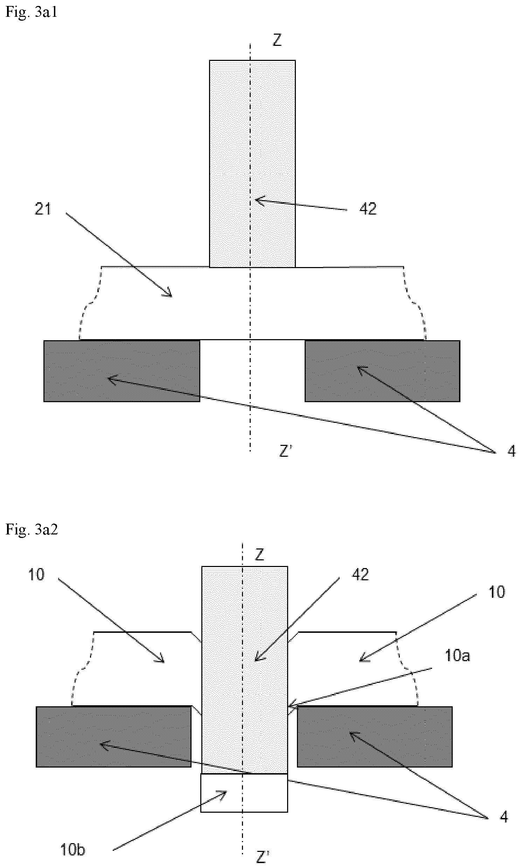

La figure 3a2 représente une portion de matrice support dans laquelle un trou traversant est en cours de perçage, vue en coupe suivant un plan contenant l'axe de ce trou, suivant un mode de réalisation particulier.

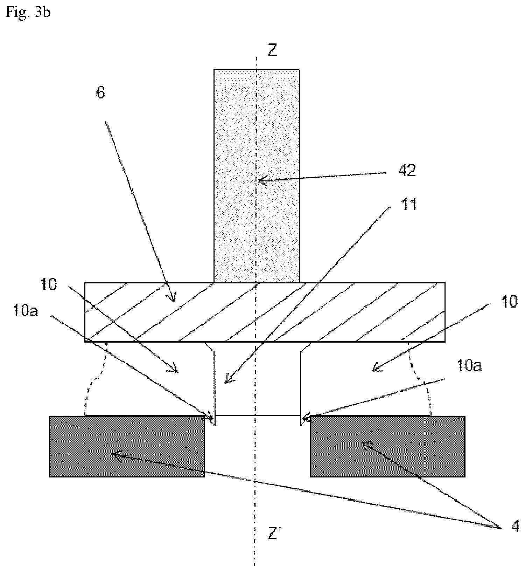

La figure 3b représente une portion de matrice support, après perçage d'un trou traversant et au début d'une étape d'insertion d'une pastille de matériau d'analyse, vue en coupe suivant un plan contenant l'axe de ce trou, suivant un mode de réalisation particulier.

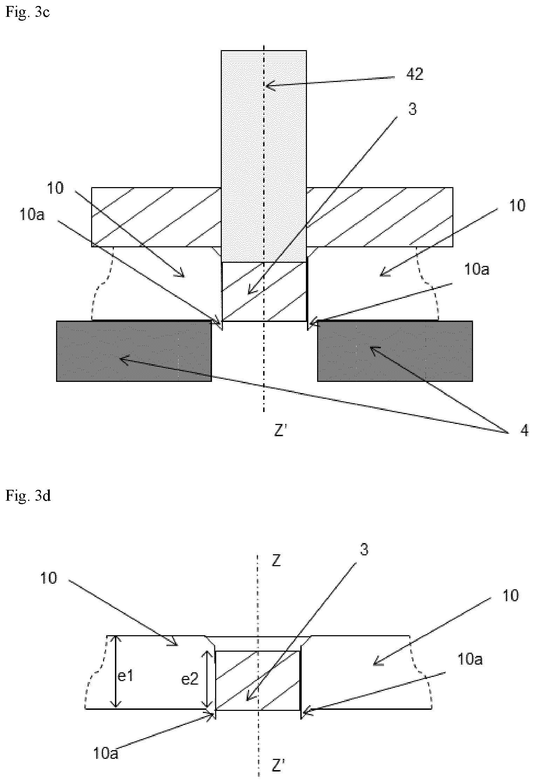

La figure 3c représente une portion de matrice support en cours d'insertion d'une pastille de matériau d'analyse, vue en coupe suivant un plan contenant l'axe de ce trou, suivant un mode de réalisation particulier.
La figure 3d représente une portion de matrice support à l'issue d'une étape d'insertion d'une pastille de matériau d'analyse, vue en coupe suivant un plan contenant l'axe de ce trou, suivant un mode de réalisation particulier.

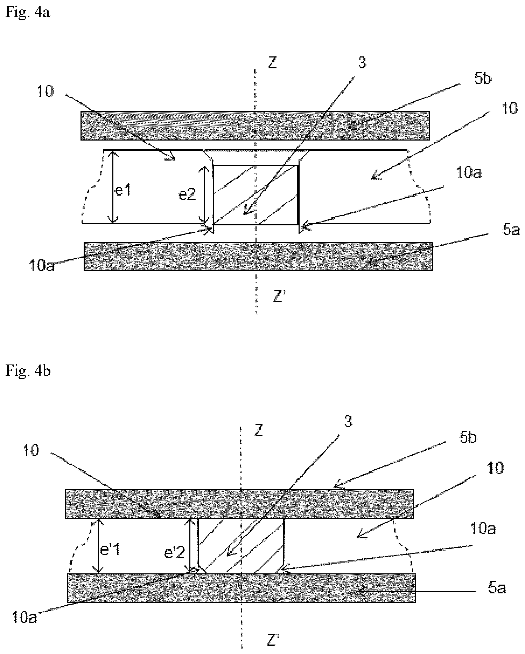

La figure 4a représente une vue en coupe de la même portion de matrice support que sur la figure 3d au début de l'étape d'assemblage dans un mode de réalisation particulier.
La figure 4b représente une vue en coupe de la même portion de matrice support que sur la figure 3d au cours de l'étape d'assemblage dans un mode de réalisation particulier.

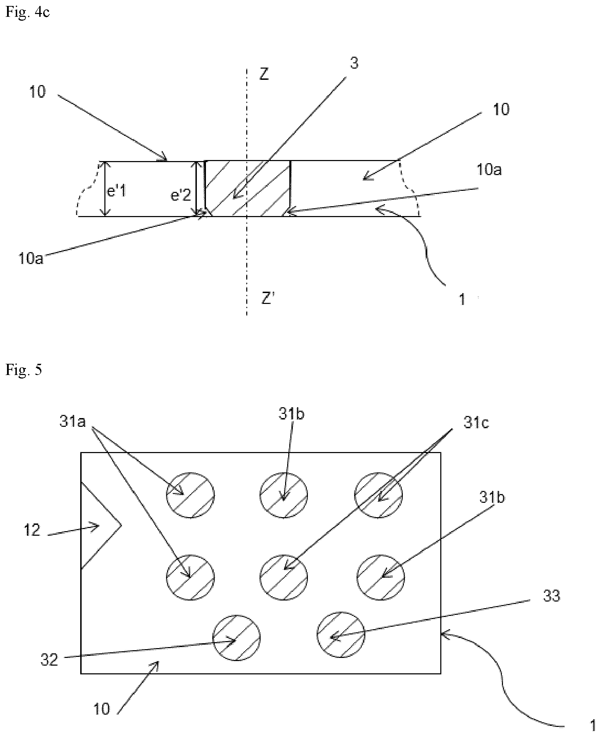

La figure 4c représente une vue en coupe de la même portion de matrice support que sur la figure 3d à l'issue de l'étape d'assemblage dans un mode de réalisation particulier.
La figure 5 représente une vue de dessus d'un mode de réalisation d'une puce d'analyse.

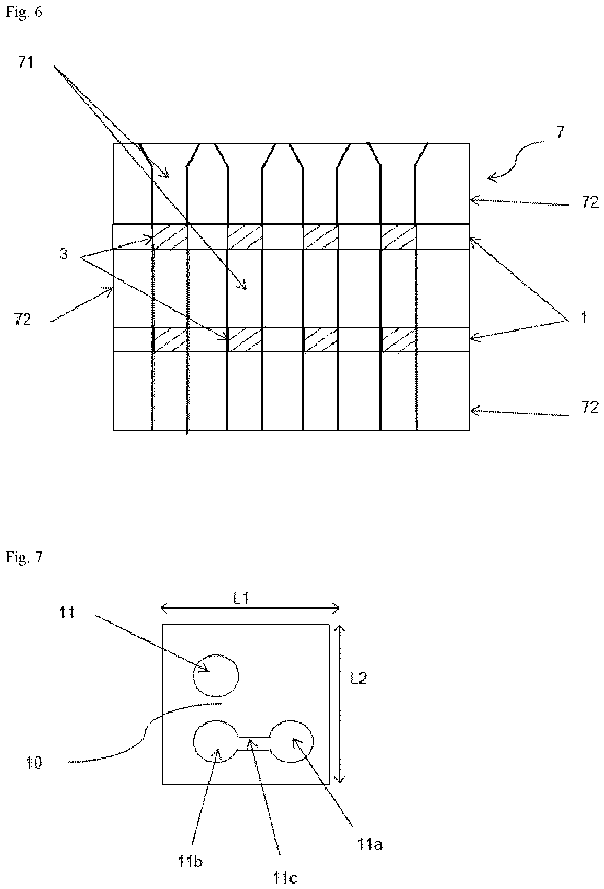

La figure 6 représente un dispositif d'analyse multiplexé comprenant deux puces d'analyse.
Sur les dessins, des références identiques désignent des objets identiques ou similaires.
La figure 7 représente en vue de dessus un mode de réalisation d'une matrice support de puce d'analyse, dans laquelle les trous traversants ont des formes différentes.

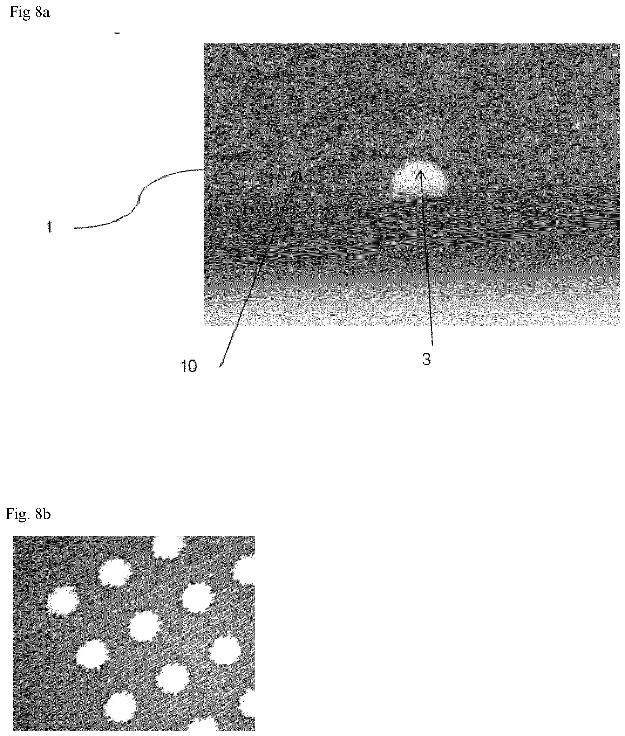

La figure 8a présente une photographie obtenue avec une loupe binoculaire (Zeiss, modèle Stemi SV8) d'une puce d'analyse d'un échantillon biologique 1 découpée suivant un plan orthogonal aux faces supérieure et inférieure de la puce et contenant un diamètre de la section circulaire d'un trou traversant cylindrique.
La figure 8b reproduit une photographie d'une puce d'analyse obtenue avec un procédé de l'art antérieur mettant en oeuvre une imprimante Xerox^{®} Solid Ink, le diamètre des pastilles d'analyse étant de l'ordre de 500 micromètres.

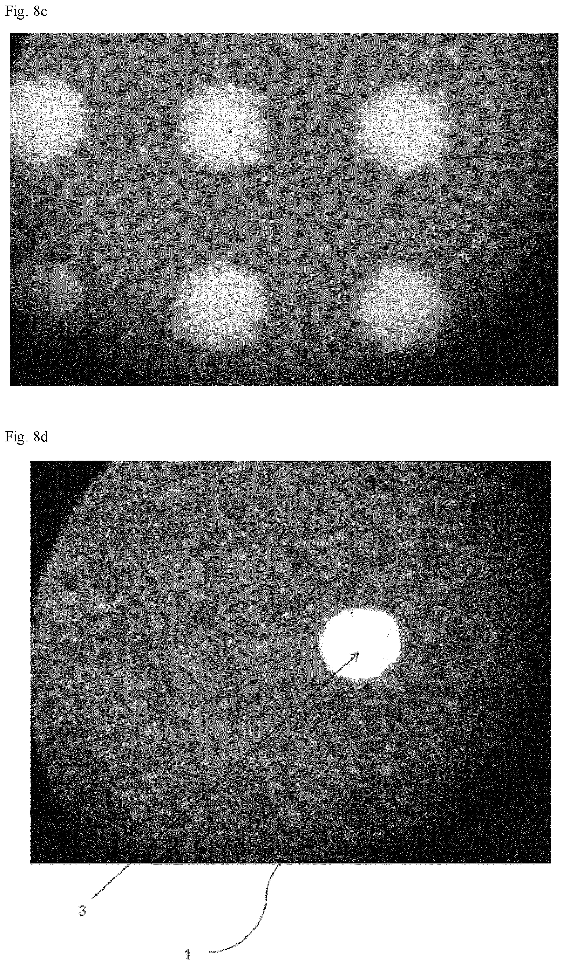

La figure 8c présente une photographie de la puce d'analyse de la figure 8b obtenue avec une loupe binoculaire (Zeiss, modèle Stemi SV8, grossissement x64).
La figure 8d présente une photographie de la puce d'analyse de la figure 8a obtenue avec une loupe binoculaire (Zeiss, modèle Stemi SV8, grossissement x64) obtenue par le procédé suivant l'invention, dans laquelle le matériau d'analyse est de la nitrocellulose, le matériau support du papier noir enduit de cire, le diamètre des pastilles d'analyse étant égal à 500 micromètres.

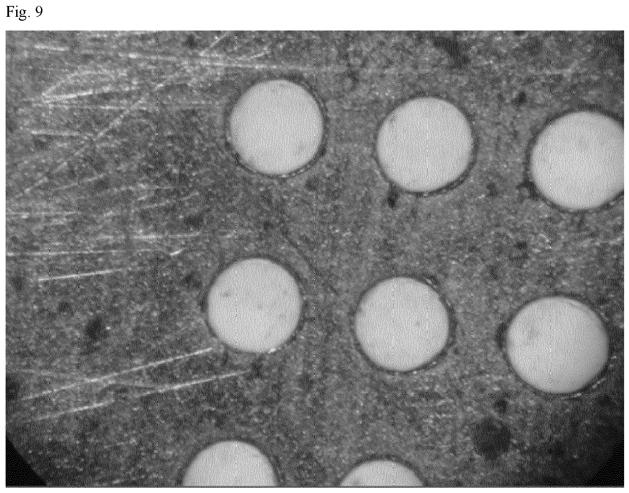

La figure 9 présente une photographie d'une puce d'analyse obtenue avec une loupe binoculaire (Zeiss, modèle Stemi SV8, grossissement x64) obtenue par le procédé suivant l'invention, dans laquelle le matériau d'analyse est de la nitrocellulose, et le matériau support est du laiton, le diamètre des pastilles d'analyse étant égal à 500 micromètres.

### DESCRIPTION DÉTAILLÉE

L'invention concerne un procédé de fabrication d'une puce d'analyse d'un échantillon biologique 1 destinée à être mise en oeuvre isolément ou dans un dispositif d'analyses 7.

Le dispositif d'analyses 7 - ou la puce d'analyse d'un échantillon biologique 1 à elle seule - permet par exemple de réaliser des analyses de liquides biologiques tels que le sang ou une fraction liquide du sang (plasma, sérum), l'urine, la salive, etc.

Le liquide analysé peut aussi être un milieu réactionnel comprenant des bio-molécules telles que des anticorps ou des protéines.

La notion d'analyse d'un échantillon biologique doit donc être comprise au sens large c'est-à-dire qu'il s'agit d'une analyse impliquant au moins une biomolécule parmi le ou les réactifs et/ou le ou les analytes.

Les puces d'analyse d'un échantillon biologique 1 peuvent ainsi être utilisées pour détecter et quantifier des biomolécules complexes dans des milieux biologiques : sang, plasma, sérum, organes ou extrait d'organes, milieu réactionnel dans lequel sont produits des biomolécules complexes (anticorps, protéines).

### Notamment, l'anayse biologique peut être un test immunologique tel qu'un test

### ELISA(« Enzyme-Linked ImmunoSorbent Assay »).

Les puces d'analyse d'un échantillon biologique 1 peuvent encore être mises en oeuvre dans le domaine de l'agro-alimentaire pour la recherche d'agents pathogènes, par exemple à l'occasion de contrôles sanitaires.

Le procédé de fabrication d'une puce d'analyse d'un échantillon biologique 1 suivant l'invention comprend :
- la fourniture d'une matrice support 10 formée dans un matériau solide, appelé « matériau support », présentant une surface inférieure et une surface supérieure et dans lequel a été formé au moins un trou 11 le traversant entre ses surfaces inférieure et supérieure;
- la fourniture d'au moins une pastille 3 découpée dans une feuille d'un second matériau solide poreux, appelé « matériau d'analyse », l'au moins une pastille 3 présentant une surface inférieure et une surface supérieure ;
- l'insertion de l'au moins une pastille 3 dans l'au moins un trou traversant 11 de la matrice support 10 par translation de l'au moins une pastille 3 suivant la direction normale aux surfaces inférieure et supérieure de la matrice 10 ;
- un assemblage mécanique à froid, à une température inférieure aux températures de fusion des matériaux support et d'analyse, au cours de laquelle une force pressante de direction normale aux surfaces inférieure et supérieure de la matrice 10 est exercée sur au moins une portion de la matrice 10 qui jouxte l'au moins une pastille 3 insérée dans la matrice 10 et /ou sur au moins une desdites surfaces inférieure et supérieure de l'au moins une pastilles 3 insérée dans la matrice 10.

La puce d'analyse d'un échantillon biologique 1 obtenue à l'issue du procédé comprend :
- une matrice 10 formée dans un matériau support solide, dans lequel a été formé au moins un trou 11 le traversant;
- au moins une pastille 3, découpée dans une feuille de matériau d'analyse solide et poreux et insérée dans l'au moinsun trou traversant 11, l'au moins une pastille 3 étant sertie sur au moins une de ses surfaces supérieure et inférieure par la matrice 10.

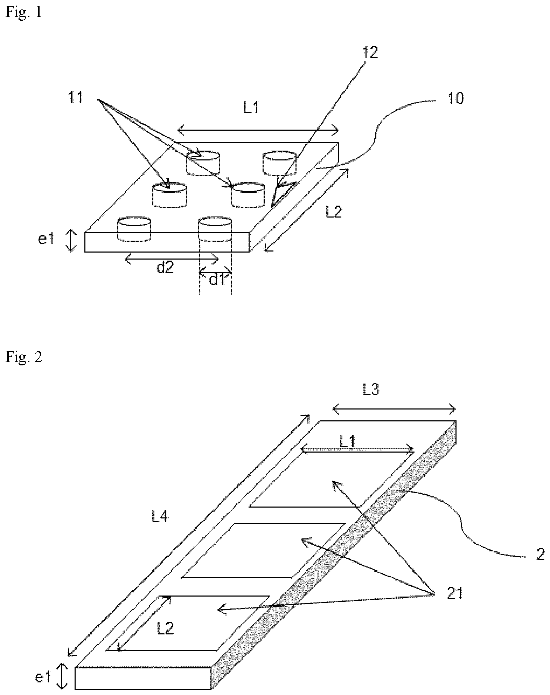

La puce d'analyse d'un échantillon biologique 1, que l'on peut observer dans un mode de réalisation particulier sur la figure 5, comporte donc une matrice support 10 formée dans un matériau solide d'épaisseur e1 dans lequel un ou plusieurs trous traversants 11 ont été formés. Un mode de réalisation particulier de la matrice support 10 est représenté sur la figure 1. Un autre mode de réalisation particulier de la matrice support 10 est représenté sur la figure 7. Comme représenté sur la figure 2, la matrice support 10 est formée par découpe d'une pièce de base 21, de forme adéquate pour le dispositif d'analyse dans lequel elle est destinée à être utilisée ou bien pour son utilisation de manière isolée. La pièce de base 21 est par exemple un parallélépipède rectangle ou carré découpée dans une bande support 2 d'un matériau solide, appelé dans la suite « matériau support », présentant une surface inférieure et une surface supérieure plane parallèles entre elles.

Une pièce de base 21 découpée dans la bande support 2 pour former une matrice support 10 peut être un parallélépipède et avoir une largeur L1 comprise entre 5 mm (5 millimètres) et 50 mm et une longueur L2 comprise entre 5 mm et 50 mm.

Dans un mode de réalisation particulier, la matrice support 10 est formée dans un matériau d'analyse d'épaisseur constante e1 entre la surface inférieure et la surface supérieure, ces surfaces étant dans ce cas planes et parallèles entre elles.

L'épaisseur e1 de la bande support 2 est alors constante et identique à celle de la pièce découpée 21. Elle est de préférence inférieure, par exemple d'au moins un facteur dix, aux autres dimensions (longueur L1 et largeur L2) de la pièce découpée 21.

La bande support 2 peut par exemple avoir une largeur L3 soit identique, soit légèrement supérieure à la largeur L1 de la matrice support 10, soit par exemple supérieure au double de la largeur L 1.

Dans ce dernier cas, il est possible de découper plusieurs pièces de base 21 dans la largeur de la bande support 2.

La largeur L3 de la bande support 2 est ainsi par exemple comprise entre 5 mm et 50 mm.

La longueur L4 de la bande support 2 peut être supérieure, voire très supérieure, à la longueur L2 de la pièce 21. La longueur L4 par exemple supérieure à 1 m voire à 10m.

De cette manière, il est possible de découper successivement plusieurs pièces de base 21 dans la bande support 2.

La découpe d'une pièce de base 21 peut par exemple être réalisée au moyen d'un emporte-pièce dans lequel on insère la bande support 2.

Si la bande support 2 est assez longue, la découpe des pièces de base 21 peut être automatisée, la bande support 2 étant translatée d'une distance adéquate entre deux découpes successives d'une pièce de base 21.

L'épaisseur e1 de la bande support 2 (et d'une pièce de base 21 découpée dans cette bande support 2) peut être inférieure à 1 mm, inférieure à 0,15 mm, ou encore inférieure entre 0,1 mm. Par exemple, l'épaisseur e1 de la bande support peut être égale à 0,06 mm.

Dans un mode de réalisation particulier, la bande support 2 a une largeur de 20 mm et une longueur de 25 m par exemple. La largeur et la longueur peuvent être changées en fonction du type de puces d'analyse 1 à fabriquer. L'épaisseur de la bande support 2 peut être égale à 0,12 mm soit l'épaisseur actuelle des membranes filtrantes (en général en nitrocellulose) formées dans le matériau d'analyse, mais elle pourrait aussi être de l'ordre de 0,10 mm.

Dans un mode de réalisation particulier, une pièce de base 21 est une membrane filtrante carrée de 20mm de côté.

La bande support 2 peut notamment être en métal, par exemple en acier, en cuivre ou en laiton. La bande support 2 peut, dans un mode de réalisation alternatif, être en plastique. A titre d'exemple non limitatif, le matériau plastique peut être le polyéthylène, le polychlorure de vinyle, le polystyrène, le polyméthacrylate de méthyle, le polypropylène ou tout autre matériau plastique couramment utilisé dans le domaine des analyses biochimiques. Il peut avoir subi un traitement de surface ou être résistant aux UV.

Le matériau support peut encore contenir des fibres végétales, à titre d'exemple de la cellulose. Il peut notamment s'agir de papier.

Le matériau support est solide mais pas nécessairement rigide. La bande support 2 peut ainsi présenter une certaine souplesse, à condition que la bande support 2 ou une matrice support 10 formée à partir de cette bande support 2 puisse être manipulée et déplacée pour la préparation des puces d'analyse 1, notamment sans se déchirer, y compris dans le cas où la préparation de la matrice support 10 est automatisée. A titre d'exemple, le papier pour photocopieur Rex Copy A4 distribué par la société Mondi^{®}, de grammage 80g/m², disponible à la date de priorité de la présente demande de brevet, convient pour l'invention.

Dans le cas où la bande support 2 est souple, le matériau est suffisamment rigide pour que les surfaces supérieure et inférieure soient effectivement planes lorsque la surface inférieure est, au moins localement, simplement posée sur un support plan.

Dans un mode de réalisation, le matériau support est assez rigide pour permettre le découpage d'une ou plusieurs pièces de base 21 au moyen d'un emporte-pièce.

Dans une pièce de base 21 de matériau support, on forme au moins un trou traversant 11 traversant le matériau dans son épaisseur, c'est-à-dire suivant la direction normale aux surfaces inférieure et supérieure de la pièce 21.

Dans un mode de réalisation particulier, un trou traversant 11 est formé au moyen d'un emporte-pièce 42, comme représenté sur les figures 3a1 (au début du perçage), 3a2 (en cours de perçage), et 3b (juste avant l'étape d'injection qui suit l'étape de perçage, décrite plus loin). Dans ce mode de réalisation, l'emporte-pièce 42 est translaté suivant la direction de l'axe du futur trou traversant 11, de manière à percer la matrice support 10. Un guide de coupe 4 dédié peut être placé sous la bande support 2. La course de l'emporte-pièce 42 à travers le guide de coupe 4 est réglée de manière à permettre l'éjection d'une pastille 10b issue de la bande support 2, comme on peut le visualiser sur les figures 3a1 et 3a2.

L'emporte-pièce peut alors être déplacé en sens inverse de manière à libérer la matrice support 10 comprenant alors un ou plusieurs trous traversants 11.

Dans un mode de réalisation particulier, les trous traversants 11 sont formés sur les emplacements correspondants aux futures pièces de base 21 dans la bande support 2 avant qu'une ou plusieurs pièces de base 21 ne soient découpées.

Dans un autre mode de réalisation, les trous traversants 11 sont formés dans une pièce de base 21 déjà découpée.

En variante, les trous traversants 11 sont formés en même temps que la pièce 21 est découpée, par exemple au moyen d'un emporte-pièce de forme adaptée.

La forme des trous traversants 11 peut être choisie en fonction des besoins de l'analyse. Par exemple, la surface délimitant l'intérieur d'un trou traversant 11 est un cylindre dont la génératrice est parallèle à la direction normale aux surfaces inférieure et supérieure de la pièce 21, direction que l'on appellera dans la suite « axe du trou 11 ».

Conformément à l'invention, les trous traversants 11 sont des cylindres de révolution.

Dans le mode de réalisation représenté sur la figure 7, l'un des trous traversants 11 peut s'analyser comme formé de deux sous-parties traversantes de section circulaire 11a et 11b, reliés par un canal 11c. Une fois les pastilles de matériau d'analyse insérées comme décrit dans la suite, il sera ainsi possible de déposer l'échantillon à analyser dans le puits correspondant au premier « sous-trou » et de laisser l'échantillon diffuser de la sous-partie 11a vers la sous-partie 11b. Dans ce cas, il est possible d'utiliser la puce d'analyse pour effectuer un test de type par flux latéral(« latéral flow »).

Les dimensions caractéristiques d'un trou traversant 11 dans une direction de la surface supérieure ou inférieure de la pièce 21 dans laquelle le trou traversant 11 est formé peuvent être inférieures à 1 mm.

Par exemple, une matrice support 10 peut comprendre 9, 12, 24, 48 ou 96 trous (ou puits) 11 ayant la forme de cylindres de révolution de diamètre d1 de l'ordre de 300 à 800 µm (micromètres), deux trous traversants 11 successifs étant espacés d'une distance d2 de l'ordre de 100 à 250 µm.

Optionnellement, une découpe ou une marque repère 12 est formée sur la matrice support 10 de manière à pouvoir repérer son orientation, notamment lors d'une analyse qui sera réalisée ultérieurement. Cette disposition permet de différencier les trous traversants 11 les uns des autres lorsque la matrice support 10 présente des éléments de symétrie.

A l'issue de l'étape de perçage d'un trou traversant 11, les faces inférieures et supérieures du matériau support ne sont plus strictement planes à proximité des bases inférieure et supérieure du trou traversant 11 mais il se forme un débord 10a de matériau support sur tout le pourtour d'un trou traversant 11 du côté de la face inférieure du matériau support, du fait de la résistance qu'oppose le matériau support à son découpage. Ce débord 10a, que l'on peut observer sur la figure 3a2, sera mis à profit lors de l'étape d'assemblage ultérieure.

Dans la première étape du procédé suivant l'invention, on fournit donc une matrice support 10 formée dans un matériau support d'épaisseur constante e1 entre une surface inférieure et une surface supérieure dans lequel ont été formés un ou plusieurs trous 11 le traversant dans son épaisseur.

Dans une deuxième étape, on fournit une feuille 6 d'épaisseur constante, notée e2, d'un second matériau solide poreux dit « matériau d'analyse », présentant une surface supérieure et une surface inférieure.

Le matériau d'analyse est destiné à recevoir sur l'une de ses surfaces inférieure et supérieure un échantillon liquide à analyser ou à filtrer, qui doit pouvoir ensuite s'écouler vers l'autre de ces surfaces, soit spontanément par simple diffusion, soit du fait d'une circulation forcée du liquide. Le matériau d'analyse peut donc être un matériau poreux tel que du papier, notamment du papier-filtre c'est -à-dire du papier à haute teneur en alpha-cellulose (notamment plus de 90%, 95%, voire 98% d'alpha-cellulose).

Le matériau d'analyse peut encore être de la nitrocellulose.

La nitrocellulose présente une bonne affinité pour les petites protéines, les peptides ou les acides nucléiques. Elle est donc de ce fait particulièrement bien adaptée pour des analyses biologiques. Ces exemples ne doivent toutefois pas être considérés comme limitatifs.

Le matériau d'analyse peut être choisi notamment en fonction de sa résistance à l'humidité, sa vitesse de filtration, sa force de rupture, sa vitesse d'ascension capillaire ou encore sa résistance au passage de l'air.

Dans le cas où le liquide à analyser contient majoritairement de l'eau, le matériau d'analyse est de préférence hydrophile, de façon à ce que le liquide à analyser mouille la surface du matériau d'analyse. Dans ce cas, le matériau support peut être hydrophobe.

Dans toute la suite, on considérera qu'un matériau est hydrophobe si l'eau ne mouille pas le matériau, c'est-à-dire si l'angle entre une goutte d'eau et la surface du matériau sur laquelle la goutte est déposée est strictement supérieur à 90°. Dans le cas contraire, le matériau d'analyse est hydrophile.

En variante, le matériau d'analyse peut être hydrophobe et le matériau support hydrophile.

Le matériau d'analyse peut être une membrane filtrante isotrope ou anisotrope. En particulier, il peut s'agir d'une membrane filtrante organique, c'est-à-dire une membrane comprenant un polymère organique tel que l'acétate de cellulose, une polysulfone ou une polyamide. L'épaisseur e2 du matériau d'analyse peut être proche de l'épaisseur e1 du matériau support. L'épaisseur e2 peut être supérieure, égale ou inférieure à l'épaisseur e1.

Dans le cas où le matériau support est de la nitrocellulose, l'épaisseur e2 du matériau d'analyse pourra ainsi être de l'ordre de quelques centaines, voire quelques dizaines de micromètres, par exemple 50 µm à 150 µm.

Dans une troisième étape, dite d'injection, on insère une portion du matériau d'analyse, dite pastille 3, dans au moins un trou traversant 11 de la matrice support 10, de manière à ce que la pastille 3 obture ce trou 11.

Une pastille 3 est donc complémentaire d'un trou 11 dans lequel elle doit être insérée sur au moins une partie de l'épaisseur du matériau support. En d'autres termes, si la surface délimitant l'intérieur d'un trou traversant 11 est un cylindre dont la génératrice est parallèle à la direction normale aux surfaces inférieure et supérieure de la pièce 21, une pastille 3 qui pourra y être insérée est un cylindre dont la génératrice est parallèle, après insertion, à l'axe du trou traversant 11 dont la base à la même forme que la base du trou traversant 11.

Le terme « pastille » ne doit donc pas être interprété de manière limitative en termes de forme. Il a été choisi par rapport au mode de réalisation le plus facile à mettre en oeuvre, c'est-à-dire celui pour lequel le trou traversant 11 et la pastille 3 sont des cylindres de révolution.

Ainsi, dans le mode de réalisation représenté sur la figure 7, la pastille 3 s'insérant dans le trou traversant 11 formé de deux sous-parties 11a, 11b et d'un canal 11c aura la forme complémentaire adaptée pour remplir les sous-parties 11a, 11b et 11c, tandis que la pastille 3 s'insérant dans le trou traversant 11 cylindrique sera cylindrique.

La hauteur de la pastille 3 peut dans tous les cas être égale à la hauteur du trou 11 (ainsi qu'on l'observe sur la vue en coupe suivant un plan contenant l'axe du trou traversant 11 présentée à la figure 4c) ou différente de celle-ci (voir la figure 9 qui présente une puce d'analyse 1 suivant l'invention dont le matériau support est du laiton enduit avec la paraffine alimentaire Le Parfait^{®} (référence 365 EMB 44 026, conditionnement 250g) et le matériau d'analyse de la nitrocellulose (Référence: Amersham Protran^{®} Premium pores 0.45µm NitroCellulose, GE Healtcare Life Science Nitrocellulose Blotting Membrane Nucleic acid and Protein application Catalogue No 10600008).

L'emboîtement réalisé à l'étape d'insertion est obtenu uniquement par translation de la pastille 3 suivant l'axe du trou traversant 11.

Par exemple, si le trou traversant 11 a été formé dans la matériau support au moyen d'un emporte-pièce, la matrice support 10 peut rester en place sous l'emporte-pièce 42 après le perçage du trou 11.

Une feuille 6 de matériau d'analyse est alors placée au-dessus de la matrice support 10 percée, comme cela est représenté sur la figure 3b et l'emporte-pièce 42 est à nouveau déplacé suivant l'axe du trou suivant une distance au moins légèrement inférieure à celle qui a permis de percer le trou 11.

De cette manière, l'emporte-pièce 42 découpe la pastille 3 à insérer et l'entraîne dans sa course à l'intérieur du trou traversant 11, mais sans qu'elle ne ressorte totalement du trou traversant 11 du côté de la surface inférieure de la matrice support 10 et de manière à ce qu'elle soit positionnée au-dessus d'au moins une partie du débord 10a.

A l'issue de cette étape d'insertion, la pastille 3 est donc bien emboîtée, au moins sur une partie de sa hauteur, dans le trou traversant 11.

Le choix de la course de l'emporte-pièce permet de positionner la pastille 3 à une hauteur choisie dans le trou traversant 11 concerné, par exemple de manière à ce que la base inférieure de la pastille 3 soit dans le même plan que la surface inférieure de la matrice support 10 ou au moins des points les plus bas du débord 10a, comme représenté sur la figure 3c.

Il est aussi possible d'utiliser un emporte-pièce dédié à l'étape d'insertion, par exemple dans un mode de réalisation dans lequel la production des matrices est automatisée et réalisée très en amont de l'étape d'insertion.

Il est encore possible de fournir une ou plusieurs pastilles 3 découpées à l'avance, par exemple au moyen d'un emporte-pièce ou de tout autre outil de découpe de précision et de les insérer dans le trou traversant 11 qui leur correspond par un mouvement de translation verticale.

Le mode de réalisation dans lequel la découpe et l'insertion sont réalisées consécutivement avec le même emporte-pièce présente l'avantage de la simplicité du positionnement des pastilles et de la rapidité de la réalisation de cette étape.

Dans ce dernier cas, il s'agit de réaliser un outil emporte-pièces et deux contre pièces correspondantes afin de pouvoir perforer convenablement la bande support 2 et ainsi réaliser les puits (ou encore « spot », ou encore trous traversants 11) dans la bande support 2 dans un premier temps. Cet outil pourra notamment être en acier afin que sa rigidité et sa tenue dans le temps soient garanties. Les dimensions de cet outil seront adaptées aux types de puces d'analyse 1 à réaliser.

Dans un mode de réalisation particulier, on forme 25 trous traversants 11 de 500 micromètres de diamètre espacés de 200 micromètres, contenus dans un carré de 6mm x 6mm placé au centre d'une pièce de base 21 en forme de carré de matériau support (20x20mm).

L'outil emporte-pièce aura donc 25 poinçons d'un diamètre de 500 micromètres. Pour d'autres configurations de la puce d'analyse d'un échantillon biologique 1, les poinçons utilisés pour tous les trous traversants 11 ou pour une partie de ces trous traversants 11 pourront avoir des diamètres différents . Le diamètre (ou une dimension caractéristique dans le cas où la section du trou traversant 11 n'est pas circulaire) de l'emporte-pièce pourra ainsi être inférieur à 1000 micromètres, inférieur à 900 micromètres, inférieur à 800 micromètres, inférieur à 700 micromètres, inférieur à 600 micromètres, inférieur à 500 micromètres, inférieur à 400 micromètres, inférieur à 300 micromètres, inférieur à 200 micromètres, inférieur à 150 micromètres, inférieur à 100 micromètres .

L'ensemble « emporte-pièces ainsi que deux contre pièces » peut être fixé sous une presse, entre les mâchoires 5a et 5b de cette presse. La bande support 2 vient se dérouler d'une manière automatique dans la partie basse de la première contre pièce et ajustée au milieu de cet « emporte-pièces ; première contre pièce ; deuxième contre pièce » afin de réaliser des puits (trous traversants 11) automatiquement par simple mouvement de haut en bas à la place prévue.

Dès que ce premier emboutissage est terminé, la bande de matériau d'analyse est introduite au-dessus de la deuxième contre pièce, une fois l'emporte pièce revenu en position « haute » . Un deuxième emboutissage (cette fois-ci du matériau d'analyse, formant la membrane filtrante) est alors effectué, permettant les découpes de pastilles 3 de ce matériau d'analyse, par exemple une membrane filtrante.

La course de descente des poinçons de l'emporte-pièce peut alors par exemple être réglée pour ce deuxième emboutissage de telle manière à ce qu'en position basse, le poinçon s'arrête au début de la bande support 2déjà percée. De cette manière les poinçons vont pousser les pastilles 3 de matériau d'analyse, par exemple de nitrocellulose, fraîchement découpées et les insérer dans les trous traversants 11 de manière à remplir, au moins partiellement, ces trous traversants 11 de la matrice (ou membrane) support.

Ceci étant fait, la bande peut avancer sous une deuxième presse qui a pour fonction de sertir les pastilles de matériau d'analyse, par exemple de nitrocellulose, dans la bande support 2, ou tout au moins dans la matrice support 10, par un choc (pression) qui pourra s'exercer sur toute la surface de la membrane afin de bien bloquer les pastilles dans la bande support, comme décrit plus loin. La force de cette pression ou (choc) peut être déterminée par des tests.

Quel que soit le mode de réalisation choisi pour l'étape d'injection, l'insertion se fait si possible uniquement par translation de la pastille 3 suivant l'axe du trou traversant 11 concerné, de manière à maintenir inchangées les propriétés du matériau d'analyse au cours de cette étape. En particulier, le procédé suivant l'invention présente l'avantage de ne mettre en oeuvre aucune étape qui pourrait introduire une anisotropie des propriétés de ce matériau et dégrader ainsi la précision et la sensibilité de l'analyse, comme discuté précédemment pour une étape de laminage.

Par ailleurs, dans le cas où la matrice support 10 comporte au moins deux pastilles 3 insérées dans au moins deux trous traversants 11 différents, ces pastilles 3 ne sont pas reliées par une portion de matériau d'analyse. En conséquence, si le matériau d'analyse est choisi suffisamment différent de celui du matériau support, il est peu probable que les molécules qui s'adsorbent sur une pastille 3 donnée risquent de migrer vers une pastille 3 voisine.

De la même façon, si le liquide à analyser mouille la pastille 3, en choisissant un matériau support d'hydrophobicité différente de celle du matériau d'analyse, il est possible de limiter, voire d'éviter, la diffusion latérale du liquide à analyser à partir d'une pastille 3 vers le matériau support - et éventuellement vers une autre pastille 3.

Ainsi, si l'échantillon à analyser est une solution aqueuse, on pourra choisir un matériau d'analyse hydrophile et un matériau support hydrophobe.

On pourra aussi envisager un matériau support hydrophile et des pastilles 3 de matériau d'analyse hydrophobes dans le cas où l'échantillon à analyser est une phase organique non miscible avec l'eau.

Cette étape d'injection uniquement par un mouvement de translation suivant l'axe du trou 11 permet, en respectant les propriétés physico-chimiques des matériaux support et d'analyse, d'obtenir à l'issue du procédé complet une puce d'analyse d'un échantillon biologique 1 permettant des analyses qualitatives de sensibilité élevée.

Dans un mode de réalisation particulier, la matrice support 10 présente au moins deux trous traversants 11 et une première pastille 3 est insérée dans l'un des trous traversants 11 avant qu'une autre pastille 3 ne soit insérée dans un autre trou traversant 11.

Dans ce cas, au moins deux emporte-pièces différents sont mis en jeu consécutivement.

Ce mode de réalisation permet d'insérer dans deux trous traversants 11 différents deux pastilles 3 formées dans des matériaux d'analyse différents.

Par exemple, on peut préparer au moins deux feuilles de matériau d'analyse au départ identiques mais ayant chacun subi une étape de bio-fonctionnalisation différente, notamment par adsorption de deux antigènes différents.

Une pastille 31a sur laquelle un premier antigène a été adsorbé pourra être insérée dans un premier trou traversant 11 d'une matrice support 10 et une autre pastille 31b sur laquelle un deuxième antigène a été adsorbé pourra être insérée dans un deuxième trou traversant11 de la matrice support 10.

Dans ce cas, une découpe ou marque repère 12 optionnellement formée sur la matrice support 10 pourra permettre de repérer les positions des différents sites de test.

Dans le cas où la gestion de la bio-fonctionnalisation se fait à l'échelle de la feuille de matériau d'analyse, plutôt que pastille 3 par pastille 3 sur une puce donnée et/ou sur des puces successives, il est possible de produire en série avec un rendement élevé des puces d'analyse identiques et présentant des qualités analytiques identiques, permettant de travailler dans des conditions de répétabilité, voire de reproductibilité satisfaisantes.

La limite de quantification, c'est-à-dire la plus petite concentration ou teneur de l'analyte pouvant être quantifiée, avec une incertitude acceptable, dans les conditions expérimentales décrites de la méthode, peut être considérée constante pour une série de puces d'analyse produites de manière automatisée à partir des mêmes feuilles de matériau d'analyse.

Cette limite de quantification est plus facile à contrôler dans le cas d'une feuille que dans le cas d'une pastille unique 3 dans lesquels les effets de bord vont jouer un rôle important.

Il est en outre possible d'orienter les molécules sondes utilisées pour la fonctionnalisation de manière à ce que les sites sur lesquels les molécules à tester peuvent se fixer soient orientés suivant l'axe du trou. Cette disposition permet d'accroître encore la sensibilité (ou la limite de quantification) de l'analyse. Les molécules sondes peuvent notamment être celles décrites dans le brevet EP3591024B1 (inventeurs Wong Ka-Leung, Goetz Joan et al.) déposé le 05/07/2018, à savoir des nanoparticules de lanthanide luminescentes ultrabrillantes comprenant du terbium. On parvient ainsi à des limites de quantification de l'ordre de quelques atomoles par microlitre de liquide à tester.

Dans un mode de réalisation particulier, le matériau d'analyse n'est pas fonctionnalisé et est conservé dans sa structure native au niveau des pastilles 3. De cette manière, on forme une pastille 32 dite « filtrante » dont la seule fonction est une fonction de filtration.

Si l'on superpose une puce d'analyse d'un échantillon biologique 1 comprenant des pastilles filtrantes 32 et une puce d'analyse d'un échantillon biologique 1 comprenant des pastilles fonctionnalisées 31 (31a, 31b, etc.) afin que chaque pastille filtrante 32 soit placée au-dessus d'une pastille fonctionnalisée 31, de manière à ce que tout le fluide qui traverse une pastille filtrante 32 parvienne sur la pastille fonctionnalisée 31 correspondante, il est ainsi possible d'analyser un prélèvement sanguin sans centrifugation préalable, les globules rouges étant retenus par la puce d'analyse d'un échantillon biologique 1 filtrante tandis que le sérum ou le plasma traverse cette puce pour être ensuite analysée par la puce d'analyse d'un échantillon biologique 1 fonctionnalisée.

Cette disposition permet donc un gain de temps et de matériel important pour de telles analyses. Dans un mode de réalisation particulier, une ou plusieurs pastilles 3 peuvent être des pastilles de calibration 33 de la puce d'analyse d'un échantillon biologique 1.

Dans un mode de réalisation particulier de l'étape d'injection, une pastille 3 est refroidie juste avant l'injection à une température légèrement inférieure à celle de la matrice support 10 dans laquelle elle doit être insérée. De cette façon, l'insertion est facilitée mais simultanément à l'insertion, la pastille 3 se réchauffe donc se dilate, de préférence suffisamment pour assurer son maintien en place à l'issue de l'étape d'injection.

Ce mode de réalisation est avantageux lorsque le matériau support présente une rigidité particulière, comme c'est le cas pour certains matériaux plastiques.

A l'issue de l'étape d'injection, une pastille 3 est emboîtée dans un trou traversant 11, de manière à ce qu'elle soit au-dessus d'au moins une fraction du débord 10a, comme représenté sur la figure 3d.

Si la puce d'analyse d'un échantillon biologique 1 est au repos, la ou les pastilles 3 restent en place dans le ou les trous traversants 11. La puce d'analyse d'un échantillon biologique 1 pourrait donc éventuellement être utilisée telle quelle.

Toutefois dans la mesure ou aucun traitement chimique ou thermique n'est mis en oeuvre à l'étape d'injection, il n'est pas certain que les pastilles 3 restent en place, par exemple du fait de l'écoulement d'un échantillon à liquide, forcé ou sous l'effet de la gravité.

Une quatrième étape, dite d'assemblage, est donc mise en oeuvre de manière à sécuriser l'assemblage de la ou des pastilles 3 avec la matrice support 10.

Pour ce faire, une force pressante de direction l'axe du trou traversant 11 est exercée sur la puce d'analyse au moyen de deux mâchoires 5a, 5b d'un système de serrage placées en-dessous et au-dessus des bases de la pastille 3 et d'au moins une fraction de la matrice support 10 qui la jouxte.

Par fraction de la matrice support 10 qui jouxte une pastille 3, on entend la fraction de matrice support qui se trouve à proximité immédiate de cette pastille 3 et délimite le trou traversant 11 dans lequel elle est insérée. Notamment, la fraction de la matrice support 10 qui jouxte une pastille 3 peut inclure tout ou partie d'un débord 10a.

Dans un mode de réalisation particulier, la fraction de matrice support 10 qui jouxte une pastille cylindrique 3 d'axe l'axe d'un trou traversant 11 et de section S peut être au moins celle qui se trouve dans le volume cylindrique d'axe l'axe du trou traversant 11 et de section S', S' étant obtenue par une homothétie de rapport supérieur à 1 et de centre l'intersection de l'axe du trou traversant et de la section S. Par exemple, si une pastille 3 est cylindrique de diamètre égal 100 micromètres, on pourra exercer une force pressante sur la portion de matrice support se trouvant dans le cylindre de même axe que la pastille 3 une fois insérée et de diamètre au moins égal à 101 micromètres, au moins égal à 102 micromètres, au moins égal à 103 micromètres, au moins égal à 104 micromètres, au moins égal à 104 micromètres, au moins égal à 110 micromètres, au moins égal à 120 micromètres, au moins égal à 130 micromètres, au moins égal à 140micromètres, 150 micromètres.

Si plusieurs pastilles 3 sont insérées dans la matrice support 10, on applique le même raisonnement à chacune des pastilles 3.

Dans un mode de réalisation particulier, la force pressant est exercée au moyen du système de serrage sur l'ensemble de la surface supérieure et/ou de la surface inférieure de la matrice support 10.

La force pressante peut alors être exercée au moyen du système de serrage dont les mâchoires 5a, 5b lorsqu'elles se rapprochent viennent enserrer au moins une portion de la matrice support 10 qui jouxte une pastille 3 de manière à ce que la portion de matrice support 10 sertisse la surface supérieure et/ou la surface inférieure de la pastille 3.

Dans ce mode de réalisation, on comprend que la force pressante peut ne pas comprendre de composante dans une direction normale à l'axe d'un trou traversant 11. La direction de la force pressante est alors colinéaire à l'axe du trou traversant 11, de sorte qu'aucune anisotropie non native n'est introduite dans les matériaux support et d'analyse dans une direction non colinéaire à l'axe du trou traversant 11. Cette disposition permet notamment de contrôler avec précision la limite de quantification de la puce d'analyse.

En variante, la force pressante peut alors être exercée au moyen du système de serrage dont les mâchoires 5a, 5b lorsqu'elles se rapprochent viennent enserrer au moins une portion de la surface inférieure et ou de la surface supérieur d'une pastille 3 qui dépasserait de la matrice support 10, de manière à ce que la surface supérieure et/ou la surface inférieure de la pastille 3 se replie sur la matrice 10 et la sertisse.

L'étape d'assemblage mécanique peut donc résulter en un sertissage d'au moins une pastille 3 sur au moins une de ses surfaces inférieure et supérieure par la matrice 10. Pour simplifier, on considère dans ce document, la formulation de la phrase précédente couvre les deux cas de figures possibles : sertissage de la matrice 10 par la pastille 3 ou sertissage de la pastille 3 par la matrice 10, l'effet technique étant dans les deux cas le même à savoir un assemblage d'au moins une pastille 3 à la matrice 10 résistante à une contrainte exercée suivant l'axe du trou traversant 11.

Si une pastille 3 est initialement de hauteur e2 inférieure à la hauteur e1 du trou traversant 11, dans l'hypothèse où la base inférieure de la pastille 3 était placée plus haut qu'au moins une fraction du débord 10 a, la force pressante qui s'exerce suivant l'axe du trou permet de réaliser un sertissage comme représenté sur les figure 4a (au début de l'étape d'assemblage), 4b (en cours d'assemblage) et 4c (à l'issue de l'étape d'assemblage) : les épaisseurs e'1 du matériau support et e'2 de la pastille 3 à l'issue l'étape d'assemblage sont inférieures à leurs épaisseurs e1 et e2 avant cette étape, et le débord 10a a été replié sur tout le pourtour de la pastille 3 de sorte que le matériau support forme une collerette au-dessus et en dessous de la pastille 3. Dans un mode de réalisation particulier, la pastille 3 est sertie sur tout le pourtour de sa base inférieure par la matrice support. Dans un mode de réalisation particulier, la pastille 3 est sertie sur tout le pourtour de sa base supérieure par la matrice support. La pastille 3 peut être simultanément sertie sur tout le pourtour de sa base inférieure et sur tout le pourtour de sa base supérieure.

En conséquence, la pastille 3 est assemblée plus solidement à la matrice support 10 après cette étape d'assemblage qu'avant et résiste davantage à l'arrachement du fait d'une force exercée de la face supérieure vers la face inférieure de cette pastille.

Lors de l'étape d'assemblage, le fait de n'exercer qu'une action mécanique, celle-ci étant de plus exercée dans la direction de l'axe d'un trou traversant 11 et possiblement répartie uniformément sur les bases d'une pastille 3, permet de maintenir l'uniformité et l'isotropie des propriétés physico-chimiques du matériau d'analyse dans les plans normaux à l'axe du trou traversant 11 concerné.

La pression exercée lors de cette étape d'assemblage peut être choisie en fonction de la résistance mécanique de l'assemblage nécessaire pour les analyses.

Par exemple, il est possible d'obtenir une puce d'analyse d'un échantillon biologique 1 dont les pastilles 3 restent en place lorsqu'un fluide les traverse de manière forcée au moyen d'une différence de pression entre la face amont et la face aval de la pastille inférieure à 100 mbar (millibar) ; inférieure à 200 mbar ; inférieure à 300 mbar ; inférieure à 400 mbar ; inférieure à 500 mbar ; inférieure à 600 mbar ; inférieure à 650 mbar ; inférieure à 700 mbar ; inférieure à 750 mbar ; inférieure à 800 mbar ; inférieure à 850 mbar ; inférieure à 900 mbar ; inférieure à 950 mbar ; inférieure à 1.00 bar.

Les faces amont et aval sont ici comprises relativement au sens et à la direction d'écoulement du fluide.

On considère qu'une pastille d'analyse 3 « reste en place » si à l'issue de l'analyse, cette pastille d'analyse obture toujours totalement le trou traversant 11 dans lequel elle a été insérée. En particulier, un décalage de la pastille 3 dans la direction de l'axe du trou traversant du fait de la différence de pression entre ses faces amont et aval peut intervenir sans pour autant remettre en cause la qualité de l'analyse pratiquée au moyen de la puce d'analyse d'un échantillon biologique 1.

Si la pastille d'analyse 3 « reste en place » lorsqu'une différence de pression existe entre ses faces amont et aval, on dira alors que la puce d'analyse d'un échantillon biologique 1 « résiste » au vide relatif correspondant.

La face supérieure d'une pastille 3 peut, dans un mode de réalisation particulier, être simplement soumise à la pression atmosphérique et la face inférieure placée en dépression.

De cette manière, un dispositif d'analyse comprenant une puce d'analyse d'un échantillon biologique 1 peut être mis en oeuvre avec circulation forcée de fluide, ce qui permet de contrôler le temps de contact de l'échantillon à tester avec une pastille3 et donc la reproductibilité de l'analyse.

Cette disposition permet aussi de réduire les durées des analyses.

Notamment, la circulation forcée de l'échantillon à tester évite, ou au moins accélère, les étapes de lavage en général nécessaires pour éliminer la fraction de l'échantillon test qui n'a pas réagi ainsi que les molécules qui se sont adsorbées de manière non spécifique sur la membrane.

Par exemple, il est possible d'effectuer un test sanguin sur une durée de 30 minutes entre le dépôt de l'échantillon (non centrifugé) et le résultat de l'analyse. Un test ELISA conventionnel nécessite un temps beaucoup plus long, en général de 12 à 24 heures.

L'assemblage mécanique est réalisé en phase solide, et à une température inférieure aux températures de fusion des matériaux support et d'analyse. Cet assemblage ne met donc pas en oeuvre de procédé de type soudure par exemple, qui pourraient dénaturer les matériaux ou modifier leur structure physique.

Grâce au procédé d'assemblage suivant l'invention, il n'y a pas de possibilité de migration du matériau support ou d'un solvant vers le matériau d'analyse et réciproquement, de sorte que le matériau d'analyse conserve à l'issue des propriétés ses propriétés natives, c'est-à-dire ses propriétés avant l'assemblage au matériau support. De plus, l'interface entre le matériau support et le matériau d'analyse est franche, comme on peut le constater sur la figure 8a sur laquelle est présentée une photographie d'une coupe d'une puce d'analyse d'un échantillon biologique 1 dans un plan contenant l'axe d'un trou traversant 11 cylindrique et un diamètre de sa section. Dans ce cas, ainsi que dans le cas de la figure 8d, le matériau support est le papier noir distribué par la société Mondi^{®}, de grammage 80g/m², disponible à la date de priorité de la présente demande de brevet. Il a été imprégné de paraffine alimentaire Le Parfait^{®} (référence 365 EMB 44 026, conditionnement 250g) de sorte qu'une matrice support percée de 9 trous pèse 55mg avant imprégnation et 77 mg après imprégnation. Le matériau d'analyse est de la nitrocellulose (Référence: Amersham Protran^{®} Premium pores 0.45µm NitroCellulose, GE Healtcare Life Science Nitrocellulose Blotting Membrane Nucleic acid and Protein application Catalogue No 10600008).

Le diamètre des trous traversants est 500 micromètres. Les photographies des figures 8a, 8c et 8d ont été obtenues avec une loupe binoculaire (Zeiss, modèle STEMI SV8, grossissement x64). On constate de plus que sur les figures 8d et 9 qu'au grossissement de la loupe binoculaire, le matériau d'analyse et le matériau support ne diffusent pas l'un vers l'autre. On observe enfin sur les figure 8a, 8d et 9 que le procédé de préparation de la puce d'analyse permet d'obtenir des puits dont les bords sont francs et ce à des dimensions de l'ordre de la dizaine ou de la centaine de micromètres.

La situation est différente dans le cas des figure 8b et 8c, qui présentent une photographie d'une puce d'analyse obtenue avec un procédé d'impression au moyen d'une imprimante à encre solide dont les puits ont un diamètre de 500 micromètres. On observe sur cette photographie que l'encre permettant de former les puits diffuse vers le matériau d'analyse, de sorte que la section d'un puits n'est pas vraiment circulaire, ce qui nuit à la précision de l'analyse ainsi qu'à sa reproductibilité, les contours de deux puits différents n'étant jamais strictement les mêmes.

Les taches blanches présentes (autres que les pastilles 3) dans le matériau support de la figure 8c correspondent à des zones dans lesquelles l'encre formant les pastilles a diffusé. Le matériau support a donc perdu ses propriétés natives du fait de l'impression et la quantité d'encre formant une pastille donnée n'est en conséquence pas connue. La reproductibilité et la précision d'une analyse sur une pastille est donc difficile à maîtriser avec ce procédé de l'art antérieur.

On notera sur la figure 8d, dont le grossissement est sensiblement égal à celui de la figure 8c que l'on observe le grain du matériau support mais pas de diffusion du matériau d'analyse vers le matériau support. Il en va de même dans le cas de la figure 9.

Le procédé suivant l'invention permet donc bien d'obtenir un contrôle plus fin des pastilles 3 d'analyse que les procédés de l'art antérieur.

A l'issue de l'étape d'assemblage, il est possible de réaliser une étape de fonctionnalisation d'une ou plusieurs pastilles 3. A titre d'exemple, on peut déposer avec une pipette ou une micropipette, éventuellement de manière automatisée, un volume choisi d'une solution de molécules sonde sur une ou plusieurs pastilles 3.

La bio-fonctionnalisation d'une puce d'analyse d'un échantillon biologique 1 consiste notamment à fixer une molécule de capture (par exemple un anticorps pour détecter un antigène) ciblant la biomolécule complexe à détecter et quantifier dans le liquide biologique à analyser.

Dans un mode de réalisation particulier, un rouleau de puces d'analyse 1, dans lesquelles les pastilles 3 sont déjà en place, peut être mis en place sur une machine de « spotting ». Le rouleau est déroulé pour faire défiler les barrettes de puces d'analyse 1 sur un plateau filtrant relié à une pompe à vide. La tête d'injection de la machine de dépôt (« spotting») dépose par exemple en 2ou 3 injections un volume de l'ordre de 10 µL d'une solution contenant la molécule capture, par exemple, à une concentration de 10 à 30 µg/mL.

Le vide d'aspiration peut être choisi pour permettre une filtration lente sur un temps d'environ 20 secondes des 10 µL de solution. La totalité des pastilles 3 de chaque puce d'analyse d'un échantillon biologique 1peut ainsi être traitée de la même façon.

Une deuxième application peut ensuite être réalisée dans les mêmes conditions mais avec une solution de BSA (Bovine Sérum Albumine), par exemple à une concentration de l'ordre de 100 µg/mL. Cette solution permet de saturer les sites polaires de la puce d'analyse d'un échantillon biologique 1 filtrante pour éviter des liaisons non spécifiques entre la biomolécule qui sera détectée et la surface d'analyse, par exemple de nitrocellulose, de la puce d'analyse d'un échantillon biologique 1.

Après incubation du rouleau de puces d'analyse 1, par exemple à 37 degrés Celsius pendant 30 minutes, les puces d'analyse 1 peuvent être séparées les unes des autres avec un outil de découpe de manière à obtenir des puces d'analyse isolées toutes de mêmes dimensions.

A l'issue de l'étape d'assemblage, et éventuellement après fonctionnalisation, il est donc possible, si cela n'a pas déjà été réalisé antérieurement, de découper les pièces de base 12 pour détacher la ou les puces d'analyse 1 de la bande support 2.

Une puce d'analyse d'un échantillon biologique 1 obtenues par le procédé suivant l'invention peut être conservée plusieurs mois à température ambiante, de préférence dans une atmosphère sèche (par exemple sous protection étanche à l'air et à l'eau). Notamment, des puces d'analyse 1 peuvent être conservées à 20°C +/- 5°C pendant au moins 1 mois, au moins 2 mois, au moins 3 mois, au moins 4 mois, au moins 5 mois, au moins 6 mois, au moins 7 mois, au moins 8 mois, au moins 9 mois, au moins 10 mois, au moins 11 mois, au moins 12 mois sans altération de leurs propriétés analytiques. Notamment, un test de référence sur un échantillon biologique de référence donnera statistiquement la même concentration de l'analyte recherchée (même moyenne et même écart type) sur un lot de puces d'analyse d'un échantillon biologique 1 juste après fabrication et après conservation à 20°C +/- 5°C sous protection étanche à l'air et à l'eau (par exemple sous blister) pendant au moins 1 mois, au moins 2 mois, au moins 3 mois, au moins 4 mois, au moins 5 mois, au moins 6 mois, au moins 7 mois, au moins 8 mois, au moins 9 mois, au moins 10 mois, au moins 11 mois, au moins 12 mois.

Les deux dernières étapes (injection et assemblage) permettent de contrôler les propriétés du matériau support indépendamment des propriétés du matériau d'analyse et réciproquement, à la différence des procédés de l'art antérieur.

Typiquement, si le matériau support est formé à partir d'une plaque de métal, cette plaque de métal peut être au préalable rendue hydrophobe. Par exemple un traitement de surface, telle qu'une enduction avec une cire naturelle ou de synthèse, peut être mis en oeuvre.

Dans les procédés connus, un tel traitement limite les qualités analytiques de la puce, puisque la cire peut migrer de manière incontrôlée du matériau support vers le matériau d'analyse, par exemple à l'occasion une étape de chauffage ou de traitement chimique ou de laminage. La cire (ou tout autre composé chimique utilisé pour le traitement de surface) peut alors interférer avec l'analyse. On observe entre autres des phénomènes de quenching de fluorescence, qui réduisent la sensibilité de l'analyse lorsque des molécules sondes fluorescentes sont mises en oeuvre. Dans l'invention, l'étape d'assemblage n'entraîne pas une telle diffusion ou migration incontrôlée de la cire. Certains modes de réalisation permettent même d'éviter une diffusion ou une migration incontrôlée d'espèces chimiques à partir des pastilles d'analyse 3 ou vers ces pastilles 3. Le procédé suivant l'invention permet donc d'obtenir une puce d'analyse d'un échantillon biologique 1 dont les zones de tests (autrement dit les pastilles d'analyse 3) sont formées avec une meilleure précision qu'avec les procédés de l'art antérieur.

Cette analyse est aussi valable pour le cas où les pastilles 3 sont fonctionnalisées avant l'étape d'injection.

On voit donc l'intérêt de l'étape d'injection selon l'invention, qui permet de limiter les interférences entre les matériaux support et d'analyse qui la constituent, et ainsi d'obtenir une puce d'analyse d'un échantillon biologique 1 de limite de quantification basse.

De plus, aucun solvant ni traitement thermique n'intervient dans les étapes d'injection et d'assemblage des zones tests avec la matrice support. Ces étapes peuvent être réalisées au moyen d'outils simples. Le procédé est donc peu coûteux, rapide, et peu polluant.

Dans la mesure où l'un des matériaux parmi les matériaux support et d'analyse peut être hydrophile, on pourra dans un mode de réalisation particulier travailler dans des conditions d'hygrométrie contrôlée pour une ou plusieurs étapes du procédé, de manière à garder un contrôle précis sur la géométrie et le volume de la matrice support 10 et/ou des pastilles 3 d'une puce d'analyse d'un échantillon biologique 1.

Une puce d'analyse d'un échantillon biologique 1 obtenue par le procédé suivant l'invention peut être mise en oeuvre isolément. Dans ce cas, un échantillon à analyser peut être déposé sur une ou plusieurs des pastilles 3 de la puce. Ou encore plusieurs échantillons à analyser peuvent être déposés chacun sur une ou plusieurs pastilles 3 différentes de celles utilisées pour les autres échantillons, simultanément ou successivement.

La puce d'analyse d'un échantillon biologique 1 peut, pour ce faire, être placée horizontalement, de sorte qu'un échantillon liquide à analyser donné s'écoule de la face supérieure de la pastille 3 sur laquelle il a été déposé vers la face inférieure de cette même pastille 3, soit sous l'effet de la gravité, soit sous l'effet d'un gradient de pression, un vide relatif étant appliqué du côté de la face inférieure de la pastille 3.

Plusieurs puces d'analyses 1, notamment fonctionnalisées de manière différente les unes des autres, peuvent être superposées dans comme décrit dans la demande WO2014/053,237A1, de manière à ce que soient formés différents canaux, chaque canal contenant une seule pastille 3 ou plusieurs pastilles 3, chacune de ces dernières appartenant à une puce d'analyse d'un échantillon biologique 1 différente.

Un tel dispositif d'analyse multiplexée en trois dimensions est schématiquement représenté sur la figure 6. Le dispositif d'analyse 7 consiste en un empilement de plaques support 72 solides, par exemple en Polymethacrylate de méthyle (PMMA) ou autre matériau plastique, dans lesquelles sont formés des microcanaux 71 et entre lesquelles sont intercalées des puces d'analyse 1.

Les microcanaux sont alignés les uns avec les autres et les sites d'analyse (c'est-à-dire les pastilles 3) des puces d'analyse 1 viennent s'insérer entre deux microcanaux de deux plaques support 72 consécutives. Il est aussi possible de superposer plusieurs puces d'analyses 1 entre deux plaques support 72 consécutives. Dans ce cas, si différents échantillons à analyser sont testés dans les différents canaux, il est possible d'effectuer une analyse multiplexée 3D.

Plus simplement, il est possible de prévoir un dispositif d'analyse 7 comprenant quatre piliers sur lesquels est fixée la puce d'analyse d'un échantillon biologique 1 par ses quatre coins. Ces deux exemples sont non limitatifs.

La détection d'un analyte d'intérêt peut se faire par une analyse immunologique de type ELISA : une fois le complexe molécule de capture / biomolécule d'intérêt formé sur les sites d'analyse (ou équivalemment puits) de la puce d'analyse d'un échantillon biologique 1, un anticorps de révélation est ajouté qui se lie spécifiquement au complexe molécule de capture / biomolécule. La fluorescence ou la couleur qui apparaît dans chaque puits est mesurée à l'aide d'un dispositif tel qu'un photomultiplicateur ou d'une caméra type CMOS, couplé à un programme informatique qui réalise les calculs.

L'invention porte donc aussi sur un dispositif d'analyse 7 comprenant au moins une puce d'analyse d'un échantillon biologique 1. Le dispositif d'analyse 7 peut contenir plusieurs puces d'analyses 1, notamment superposées, comme décrit ci-dessus.

L'invention porte en outre sur un kit de diagnostic comprenant au moins une puce d'analyse d'un échantillon biologique 1. Le kit de diagnostic peut aussi comprendre un support pour la puce d'analyse d'un échantillon biologique 1 et/ou au moins un réactif d'analyse. Le réactif d'analyse peut notamment contenir un ou plusieurs anticorps ou un ou plusieurs antigènes en vue de mettre en oeuvre un test immunologique. Le réactif d'analyse peut aussi être un révélateur.

Dans le cas de la présente demande, on entend par test immunologique (« immunoassay ») un test mettant en oeuvre au moins un antigène pour détecter des anticorps dirigés contre un agent pathogène dans un prélèvement ou au moins un anticorps pour détecter un antigène d'un agent pathogène dans un prélèvement.

Le réactif d'analyse peut aussi être un tampon, par exemple un tampon phosphate salé (PBS) ou encore un autre solution, par exemple un solution d'albumine de sérum bovin (BSA). L'invention concerne l'utilisation d'une puce d'analyse d'un échantillon biologique 1 à des fins de diagnostic ou pour réaliser un test immunologique. Notamment, des test sérologiques de recherche at la quantification d'anticorps de type immunoglobulines G ou M (IgG ou IgM) peuvent être mis en oeuvre après fonctionnalisations de la puce d'analyse d'un échantillon biologique 1 au moyen de l'antigène adéquat. La puce d'analyse d'un échantillon biologique 1 peut aussi être fonctionnalisée pour rechercher et quantifier les protéines de choc thermique telles que les protéines de la famille HSP60 au moyen d'un anticorps spécifique, par exemple fluorescent. L'apolipoprotéine ApoA1 ou encore des médiateurs de l'inflammation tels que la protéine C-réactive (CRP) ou la protéine stabilisatrice du pancréas PSP (« pancreatic stone protein ») peuvent être recherchés par la mise en oeuvre d'une méthode enzymoimmunologique sur la puce d'analyse d'un échantillon biologique 1.

L'invention porte enfin sur un dispositif de fabrication d'une puce d'analyse d'un échantillon biologique 1 suivant l'un quelconque des modes de réalisation comprenant :
- un système d'insertion adapté pour insérer au moins une pastille 3 dans au moins un trou traversant 11 de la matrice 10 par translation de la pastille 3 suivant la direction normale aux surfaces inférieure et supérieure de la matrice 10
- un système d'assemblage mécanique à une température inférieure aux températures de fusion des matériaux support et d'analyse, adapté pour exercer une force pressante de direction normale aux surfaces inférieure et supérieure de la matrice 10 sur au moins une portion de la matrice 10 qui jouxte l'au moins une pastille 3 insérée dans la matrice 10 et /ou sur au moins une desdites surfaces inférieure et supérieure de l'au moins une pastille 3 insérée dans la matrice 10.

Le dispositif de fabrication d'une puce d'analyse d'un échantillon biologique 1 peut notamment comprendre un ou plusieurs emporte-pièce, comprenant chacun un ou plusieurs poinçons identiques ou non et dont la course est réglable, et une ou plusieurs contre-pièce.

Le dispositif de fabrication d'une puce d'analyse d'un échantillon biologique 1 peut être entièrement automatisé.

### LISTE DES SIGNES DE RÉFÉRENCE

1 : puce d'analyse
10 : matrice support
10a : débord de matériau support
11 : trou traversant la matrice support 10
11a, 11b : sous-partie d'un trou traversant 11
11c : canal reliant deux sous-parties 11a et 11b
12 : découpe / marque repère
2 : bande support
21 : pièce de base
3 : pastille de matériau d'analyse
31 a, b, c : pastille 3 fonctionnalisée
32 : pastille filtrante
33 : pastille de calibration
4 : guide de coupe
42 : poinçon d'un emporte-pièce
5a, 5b : mâchoires d'une presse
6 : feuille de matériau d'analyse
7 : dispositif d'analyse multiplexé
71 : microcanal
72 : plaque support

## Revendications

1. Procédé de fabrication d'une puce d'analyse d'un échantillon biologique (1) comprenant :
- on fournit une matrice (10) formée dans un matériau support solide, présentant une surface inférieure et une surface supérieure et dans laquelle a été formé au moins un trou (11) la traversant entre lesdites surfaces inférieure et supérieure, le trou (11) traversant étant un cylindre de révolution ;
- on fournit au moins une pastille (3), découpée dans une feuille (6) de matériau d'analyse solide et poreux, ladite pastille présentant une surface inférieure et une surface supérieure,
- on procède à l'insertion de l'au moins une pastille (3) dans l'au moins un trou traversant (11) de la matrice (10) par translation de l'au moins une pastille (3) suivant la direction normale aux surfaces inférieure et supérieure de la matrice (10) ;
- on réalise un assemblage mécanique à une température inférieure aux températures de fusion des matériaux support et d'analyse, au cours de laquelle une force pressante de direction normale aux surfaces inférieure et supérieure de la matrice (10) est exercée sur au moins une portion de la matrice (10) qui jouxte l'au moins une pastille (3) insérée dans la matrice (10) et /ou sur au moins une des surfaces inférieure et supérieure de l'au moins une pastille (3) insérée dans la matrice (10), ledit assemblage mécanique de l'au moins une pastille (3) avec la matrice (10) résultant en un sertissage de l'au moins une pastille (3) sur au moins une portion de ses surfaces inférieure et supérieure par la matrice (10).

2. Procédé de fabrication d'une puce d'analyse d'un échantillon biologique (1) selon la revendication 1 **caractérisé en ce que** ladite force pressante est exercée sur une portion de la matrice (10) qui jouxte l'au moins une pastille (3) insérée dans la matrice (10).

3. Procédé de fabrication d'une puce d'analyse d'un échantillon biologique (1) selon la revendication 1 ou la revendication 2 **caractérisé en ce que** ladite force pressante est exercée sur au moins une des surfaces inférieure et supérieure de l'au moins une pastille (3) insérée dans la matrice (10).

4. Procédé de fabrication d'une puce d'analyse d'un échantillon biologique (1) selon l'une quelconque des revendications 1 à 3 **caractérisé en ce que** le matériau support est hydrophobe et le matériau d'analyse est hydrophile ou inversement.

5. Procédé de fabrication d'une puce d'analyse d'un échantillon biologique (1) selon l'une quelconque des revendications 1 à 4 **caractérisé en ce que**, pour l'insertion de l'au moins une pastille (3) dans l'au moins un trou traversant (11), l'au moins une pastille (3) est translatée dans l'au moins un trou traversant (11) au moyen d'un emporte-pièce, **en ce que** l'au moins une pastille (3) a été découpée dans la feuille (6) de matériau d'analyse avant son insertion au moyen de ce même emporte-pièce et **en ce que** l'au moins un trou traversant (11) a été formé au préalable dans la matrice (10) au moyen de ce même emporte-pièce.

6. Procédé de fabrication d'une puce d'analyse d'un échantillon biologique (1) selon l'une quelconque des revendications 1 à 5 **caractérisé en ce qu'**à l'issue de l'assemblage mécanique, on procède à la fonctionnalisation de l'au moins une pastille (3).

7. Procédé de fabrication d'une puce d'analyse d'un échantillon biologique (1) selon l'une quelconque des revendications 1 à 6 **caractérisé en ce qu'**on procède à la fonctionnalisation du matériau d'analyse avant l'insertion de l'au moins une pastille (3) dans la matrice (10).

8. Procédé de fabrication d'une puce d'analyse d'un échantillon biologique (1) selon l'une quelconque des revendications 1 à 7 **caractérisé en ce qu'**avant l'insertion de l'au moins une pastille (3) dans la matrice (10), l'au moins une pastille (3) est portée à une température inférieure à celle de la matrice (10).

9. Procédé de fabrication d'une puce d'analyse d'un échantillon biologique (1) selon les revendications 5 et 7 **caractérisé en ce qu'**on réitère l'insertion d'au moins une pastille (3) dans la matrice (10) au moins une fois en utilisant pour chaque nouvelle insertion un matériau d'analyse fonctionnalisé différent de celui utilisé pour l'insertion précédente et un emporte-pièce correspondant à au moins un trou traversant (11) de la matrice (10) différent de celui utilisé pour l'insertion précédente.

10. Puce d'analyse d'un échantillon biologique (1) comprenant :
- une matrice (10) formée dans un matériau support solide, présentant une surface inférieure et une surface supérieure et dans laquelle a été formé au moins un trou (11) la traversant entre lesdites surfaces inférieure et supérieure, le trou (11) traversant étant un cylindre de révolution;
- au moins une pastille (3), découpée dans une feuille de matériau d'analyse solide et poreux et insérée dans l'au moins un trou traversant (11), l'au moins une pastille (3) présentant une surface inférieure et une surface supérieure,
et **caractérisée en ce que** l'au moins une pastille (3) est sertie sur au moins une de ses surfaces supérieure et inférieure par la matrice (10).

11. Puce d'analyse d'un échantillon biologique (1) selon la revendication 10 dans laquelle le matériau support comprend au moins un composant choisi parmi un métal, un matériau plastique et la cellulose ou une combinaison de ceux-ci et en ce que le matériau d'analyse dont est formée l'au moins une pastille (3) comprend au moins un composant choisi parmi la nitrocellulose, la cellulose et un polymère organique.

12. Puce d'analyse d'un échantillon biologique (1) selon l'une quelconque des revendications 10 à 11 dans laquelle l'assemblage de l'au moins une pastille (3) et de la matrice (10) résiste au moins à un vide relatif égal à 0,100 bar.

13. Dispositif d'analyse comprenant au moins deux puces d'analyse d'un échantillon biologique (1) selon l'une des revendications 10 à 12 superposées et dans lequel l'au moins une pastille (3) d'une des au moins deux puces est configurée pour assurer une fonction de filtration et est superposée avec l'au moins une pastille (3) fonctionnalisée d'une autre puce des au moins deux puces.

14. Kit de diagnostic comprenant au moins une puce d'analyse d'un échantillon biologique (1) selon l'une des revendications 10 à 12 et au moins un réactif d'analyse.

15. Utilisation d'une puce d'analyse d'un échantillon biologique (1) selon l'une quelconque des revendications 10 à 12 à des fins de diagnostic ou dans un test immunologique.

## Patentansprüche

1. Verfahren zur Herstellung eines Chips zum Analysieren einer biologischen Probe (1), das Folgendes beinhaltet:
- Bereitstellen einer aus einem festen Trägermaterial gebildeten Matrize (10) mit einer Unterseite und einer Oberseite, in der mindestens ein sie zwischen der genannten Unter- und Oberseite durchquerendes Loch (11) ausgebildet ist, wobei das Durchgangsloch (11) ein Rotationszylinder ist;
- Bereitstellen mindestens eines Pellets (3), das aus einer Folie (6) aus festem, porösem Analysematerial ausgeschnitten ist, wobei das genannte Pellet eine Unterseite und eine Oberseite aufweist,
- Vornehmen des Einsetzens des mindestens einen Pellets (3) in mindestens ein Durchgangsloch (11) der Matrize (10) durch Translation des mindestens einen Pellets (3) entlang der Richtung normal zur Unter- und Oberseite der Matrize (10);
- Durchführen einer mechanischen Montage bei einer Temperatur unterhalb der Schmelztemperaturen der Träger- und Analysematerialien, wobei eine Druckkraft mit einer Richtung normal zur Unter- und Oberseite der Matrize (10) auf mindestens einen Abschnitt der Matrize (10), der an das mindestens eine in die Matrize (10) eingesetzte Pellet (3) angrenzt, und/oder auf die Unter- und/oder Oberseite des mindestens einen in die Matrize (10) eingesetzten Pellet (3) ausgeübt wird, wobei die mechanische Montage des mindestens einen Pellets (3) mit der Matrize (10) in einem Crimpen des mindestens einen Pellets (3) auf mindestens einem Abschnitt seiner Unter- und Oberseite durch die Matrize (10) resultiert.

2. Verfahren zur Herstellung eines Chips zum Analysieren einer biologischen Probe (1) nach Anspruch 1, **dadurch gekennzeichnet, dass** die genannte Druckkraft auf einen Abschnitt der Matrize (10) ausgeübt wird, der an das mindestens eine in die Matrize (10) eingesetzte Pellet (3) angrenzt.

3. Verfahren zur Herstellung eines Chips zum Analysieren einer biologischen Probe (1) nach Anspruch 1 oder Anspruch 2, **dadurch gekennzeichnet, dass** die genannte Druckkraft auf die Unter- und/oder Oberseite des mindestens einen in die Matrize (10) eingesetzten Pellets (3) ausgeübt wird.

4. Verfahren zur Herstellung eines Chips zum Analysieren einer biologischen Probe (1) nach einem der Ansprüche 1 bis 3, **dadurch gekennzeichnet, dass** das Trägermaterial hydrophob ist und das Analysematerial hydrophil ist oder umgekehrt.

5. Verfahren zur Herstellung eines Chips zum Analysieren einer biologischen Probe (1) nach einem der Ansprüche 1 bis 4, **dadurch gekennzeichnet, dass** zum Einsetzen des mindestens einen Pellets (3) in das mindestens eine Durchgangsloch (11) das mindestens eine Pellet (3) mittels einer Stanze in das mindestens eine Durchgangsloch (11) translatiert wird, dadurch, dass das mindestens eine Pellet (3) vor dem Einsetzen mittels derselben Stanze aus der Folie (6) aus Analysematerial ausgeschnitten wurde, und dadurch, dass das mindestens eine Durchgangsloch (11) mittels derselben Stanze zuvor in der Matrize (10) ausgebildet wurde.

6. Verfahren zur Herstellung eines Chips zum Analysieren einer biologischen Probe (1) nach einem der Ansprüche 1 bis 5, **dadurch gekennzeichnet, dass** nach Abschluss der mechanischen Montage die Funktionalisierung des mindestens einen Pellets (3) vorgenommen wird.

7. Verfahren zur Herstellung eines Chips zum Analysieren einer biologischen Probe (1) nach einem der Ansprüche 1 bis 6, **dadurch gekennzeichnet, dass** die Funktionalisierung des Analysematerials vor dem Einsetzen des mindestens einen Pellets (3) in die Matrize (10) vorgenommen wird.

8. Verfahren zur Herstellung eines Chips zum Analysieren einer biologischen Probe (1) nach einem der Ansprüche 1 bis 7, **dadurch gekennzeichnet, dass** vor dem Einsetzen des mindestens einen Pellets (3) in die Matrize (10) das mindestens eine Pellet (3) auf eine Temperatur gebracht wird, die niedriger ist als die der Matrize (10).

9. Verfahren zur Herstellung eines Chips zum Analysieren einer biologischen Probe (1) nach den Ansprüchen 5 und 7, **dadurch gekennzeichnet, dass** das Einsetzen mindestens eines Pellets (3) in die Matrize (10) mindestens einmal wiederholt wird, wobei für jedes neue Einsetzen ein funktionalisiertes Analysematerial, das sich von dem für das vorherige Einsetzen verwendeten unterscheidet, und eine Stanze entsprechend mindestens einem Durchgangsloch (11) der Matrize (10) verwendet wird, die sich von der für das vorherige Einsetzen verwendeten unterscheidet.

10. Chip zum Analysieren einer biologischen Probe (1), der Folgendes umfasst:
- eine aus einem festen Trägermaterial gebildete Matrize (10) mit einer Unterseite und einer Oberseite, in der mindestens ein sie durchquerendes Loch (11) zwischen der genannten Unter- und Oberseite ausgebildet wurde, wobei das Durchgangsloch (11) ein Rotationszylinder ist;
- mindestens ein Pellet (3), das aus einer Folie aus festem, porösem Analysematerial ausgeschnitten und in das mindestens eine Durchgangsloch (11) eingesetzt ist, wobei das mindestens eine Pellet (3) eine Unterseite und eine Oberseite aufweist,
und **dadurch gekennzeichnet, dass** das mindestens eine Pellet (3) auf seiner Ober- und/oder Unterseite durch die Matrize (10) gecrimpt ist.

11. Chip zum Analysieren einer biologischen Probe (1) nach Anspruch 10, wobei das Trägermaterial mindestens eine Komponente ausgewählt aus einem Metall, einem Kunststoffmaterial und Cellulose oder einer Kombination davon umfasst, und dadurch, dass das Analysematerial, aus dem das mindestens eine Pellet (3) gebildet ist, mindestens eine Komponente ausgewählt aus Nitrocellulose, Cellulose und einem organischen Polymer umfasst.

12. Chip zum Analysieren einer biologischen Probe (1) nach einem der Ansprüche 10 bis 11, wobei die Montage des mindestens einen Pellets (3) und der Matrize (10) mindestens einem relativen Vakuum von 0,100 bar standhält.

13. Analysevorrichtung mit mindestens zwei überlagerten Chips zum Analysieren einer biologischen Probe (1) nach einem der Ansprüche 10 bis 12, wobei das mindestens eine Pellet (3) von einem der mindestens zwei Chips so konfiguriert ist, dass es eine Filterfunktion erfüllt, und mit dem mindestens einen funktionalisierten Pellet (3) eines anderen der mindestens zwei Chips überlagert ist.

14. Diagnostikset mit mindestens einem Chip zum Analysieren einer biologischen Probe (1) nach einem der Ansprüche 10 bis 12 und mindestens einem Analysereagenz.

15. Verwendung eines Chips zum Analysieren einer biologischen Probe (1) nach einem der Ansprüche 10 bis 12 für diagnostische Zwecke oder in einem Immunoassay.

## Claims

1. Method for manufacturing a biological sample analysis chip comprising:
- a matrix (10) formed in a solid support material, having a lower surface and an upper surface and in which at least one hole (11) extending between said lower and upper surfaces has been formed, is provided, wherein said through hole (11) is a cylinder of revolution;
- at least one pad (3) is provided, cut from a sheet (6) of solid and porous analysis material, said pad having a lower surface and an upper surface,
- the at least one pad (3) is inserted into the at least one through hole (11) of the matrix (10) by translation of the at least one pad (3) in the direction normal to the lower and upper surfaces of the matrix (10);
- a mechanical assembly is carried out at a temperature below the melting temperatures of the support and analysis materials, during which a pressing force in the direction normal to the lower and upper surfaces of the matrix (10) is exerted on at least one portion of the matrix (10) which adjoins said at least one pad (3) inserted into the matrix (10) and/or on at least one of the lower and upper surfaces of the at least one pad (3) inserted into the matrix (10), said mechanical assembly of the at least one pad (3) with the matrix (10) resulting in the at least one pad (3) being crimped on at least a portion of its lower and upper surfaces by the matrix (10).

2. Method for manufacturing a biological sample analysis chip (1) according to claim 1, **characterized in that** the said pressing force is exerted on a portion of the matrix (10) which adjoins the at least one pad (3) inserted into the matrix (10).

3. Method of manufacturing a biological sample analysis chip (1) according to Claim 1 or Claim 2, **characterized in that** the said pressing force is exerted on at least one of the lower and upper surfaces of the at least one pad (3) inserted into the matrix (10).

4. Method of manufacturing a biological sample analysis chip (1) according to any one of Claims 1 to 3, **characterized in that** the support material is hydrophobic and the analysis material is hydrophilic or vice versa.

5. Method for manufacturing a biological sample analysis chip (1) according to any one of Claims 1 to 4, **characterized in that**, for the insertion of the at least one pad (3) in the at least one through hole (11), the at least one pad (3) is translated into the at least one through hole (11) by means of a punch, **in that** the at least one pad (3) has been cut from the sheet (6) of analysis material before its insertion by means of this same punch and **in that** the at least one through hole (11) has been formed beforehand in the matrix (10) by means of this same punch.

6. Method of manufacturing a biological sample analysis chip (1) according to any one of Claims 1 to 5, **characterized in that** after the mechanical assembly, the functionalization of the at least one pad (3) is carried out.

7. Method for manufacturing a biological sample analysis chip (1) according to any one of Claims 1 to 6, **characterized in that** the functionalization of the analysis material is carried out before the insertion of the at least one pad (3) into the matrix (10).

8. Method of manufacturing a biological sample analysis chip (1) according to any one of Claims 1 to 7, **characterized in that** before the insertion of the at least one pad (3) in the matrix (10), the at least one pad (3) is brought to a temperature lower than that of the matrix (10).

9. Method for manufacturing a biological sample analysis chip (1) according to claims 5 and 7, **characterized in that** the insertion of at least one pad (3) into the matrix is repeated (10) at least once using for each new insertion a functionalized analysis material different from that used for the previous insertion and a punch corresponding to at least one through hole (11) of the matrix (10) different from the one used for the previous insertion.

10. Biological sample analysis chip (1) comprising:
- a matrix (10) formed in a solid support material, having a lower surface and an upper surface and in which at least one through hole (11) extending between said lower and upper surfaces has been formed, said through hole (11) being a cylinder of revolution;
- at least one pad (3), cut from a sheet of solid and porous analysis material and inserted into the at least one through hole (11), the at least one pad (3) having a lower surface and an upper surface,
and **characterized in that** the at least one pad (3) is crimped on at least one of its upper and lower surfaces by the matrix (10).

11. Biological sample analysis chip (1) according to claim 10, in which the support material comprises at least one component chosen from among a metal, a plastic material and cellulose or a combination thereof and in that the analysis material of which the at least one pad (3) is formed comprises at least one component chosen from nitrocellulose, cellulose and an organic polymer.

12. Biological sample analysis chip (1) according to any one of Claims 10 to 11, in which the assembly of the at least one pad (3) and the matrix (10) is resistant to at least a relative vacuum equal to 0.100 bar.

13. Analysis device comprising at least two biological sample analysis chips (1) according to one of claims 10 to 12 superimposed and in which the at least one pad (3) of one of the at least two chips is configured to perform a filtration function and is superimposed with the at least one functionalized pad (3) of another chip of the at least two chips.

14. Diagnostic kit comprising at least one biological sample analysis chip (1) according to one of Claims 10 to 12 and at least one analysis reagent.

15. Use of a biological sample analysis chip (1) according to any one of Claims 10 to 12 for diagnostic purposes or in an immunological test.
